# EUROPÄISCHE PATENTSCHRIFT

(11) **EP 1 315 767 B1**
(45) Veröffentlichungstag und Bekanntmachung des Hinweises auf die Patenterteilung: **23.11.2005**
(21) Anmeldenummer: 01963000.3
(22) Anmeldetag: 07.09.2001
(51) Int. Cl.: C08G 18/40, C08G 18/62, C08G 18/42, C09D 175/06

(54) **THERMISCH ODER THERMISCH UND MIT AKTINISCHER STRAHLUNG HÄRTBARER, NICHT WÄSSRIGER BESCHICHTUNGSSTOFF, VERFAHREN ZU SEINER HERSTELLUNG UND SEINE VERWENDUNG**
NON-AQUEOUS COATING MATERIAL WHICH IS THERMALLY HARDENABLE OR HARDENABLE IN A THERMAL MANNER AND BY MEANS OF ACTINIC RADIATION, METHOD FOR THE PRODUCTION AND USE THEREOF
MATIERE DE REVETEMENT NON AQUEUSE DURCISSABLE THERMIQUEMENT OU THERMIQUEMENT ET PAR RAYONNEMENT ACTINIQUE, PROCEDES DE PREPARATION ET UTILISATION DE LADITE MATIERE

(30) Priorität: 09.09.2000 DE 10044670
(43) Veröffentlichungstag der Anmeldung: 04.06.2003
(73) Patentinhaber: BASF Coatings AG, 48165 Münster (DE)
(72) Erfinder: LETTMANN, Bernhard, 48317 Drensteinfurt (DE); BORGHOLTE, Harald, 48151 Münster (DE); FISCHER, Marion, 48165 Münster (DE)
(74) Vertreter: Fitzner, Uwe
(86) Internationale Anmeldenummer: PCT/EP2001/010311
(87) Internationale Veröffentlichungsnummer: WO 2002/020637

(56) Entgegenhaltungen:
- EP-A- 0 470 461
- EP-A- 0 722 963
- DE-A- 4 024 204
- DE-A- 4 421 823
- DE-A- 19 914 899

## Beschreibung

Die vorliegende Erfindung betrifft einen neuen thermisch oder thermisch und mit aktinischer Strahlung härtbaren, nicht wäßrigen Beschichtungsstoff. Außerdem betrifft die vorliegende Erfindung ein neues Verfahren zur Herstellung eines Beschichtungsstoffs, insbesondere des neuen Beschichtungsstoffs. Des weiteren betrifft die vorliegende Erfindung die Verwendung des neuen Beschichtungsstoffs zur Herstellung von Beschichtungen, insbesondere Automobilserienlackierungen, Nutzfahrzeuglackierungen und Autoreparaturlackierungen.

Thermisch oder thermisch und mit aktinischer Strahlung härtbare, nichtwäßrige Beschichtungsstoffe, enthaltend
(A) eine hydroxygruppenhaltige Bindemittelkomponente, enthaltend
   (A 1) mindestens einen hydroxygruppenhaltigen Polyester und
   (A 2) mindestens ein hydroxygruppenhaltiges (Meth)Acrylatcopolymerisat, das zumindest teilweise in der Gegenwart des Polyesters (A 1) hergestellt worden ist,
(B) mindestens eine Vernetzungsmittelkomponente, enthaltend mindestens ein Polyisocyanat,
sind aus der deutschen Patentanmeldung DE 40 24 204 A 1 oder der internationalen Patentanmeldung WO 96/26969 bekannt.

Die aus der deutschen Patentanmeldung DE 40 24 204 A 1 bekannten Beschichtungsstoffe weisen eine lange Topfzeit auf und sind dennoch bei Raumtemperatur oder leicht erhöhter Temperatur sehr rasch härtbar. Die hieraus hergestellten Beschichtungen weisen sehr gute mechanische Eigenschaften und eine gute Glanzhaltung, Rißbeständigkeit, Fülle und Verlauf auf.

Darüber hinaus weisen die aus der internationalen Patentanmeldung WO 96/26969 bekannten Beschichtungsstoffe bzw. die hieraus hergestellten Beschichtungen eine verbesserte Abklebebeständigkeit, Lösemittelbeständigkeit und Oberflächenhärte auf.

Die bekannten Beschichtungsstoffe weisen den Nachteil auf, daß bei ihrer Applikation und Härtung nach den derzeitigen gesetzlichen Bestimmungen zu große Menge an flüchtigen organischen Verbindungen emittiert werden. Mit anderen Worten, der Gehalt der bekannten Beschichtungsstoffe an flüchtigen organischen Verbindungen ("Volatile Organic Compounds", VOC) ist zu hoch und überschreitet die derzeitig gültigen Grenzwerte.

Da aber die bekannten Beschichtungsstoffe und die hieraus hergestellten Beschichtungen, wie vorstehend aufgezeigt, hervorragende anwendungstechnische Eigenschaften aufweisen, wäre es in hohem Maße wünschenswert, sie auch weiterhin verwenden zu können. Voraussetzung hierfür wäre allerdings, die VOC unter die gesetzlichen Grenzwerte abzusenken, ohne daß dabei eine Verschlechterung des Eigenschaftsprofils eintritt. Die Erhöhung des Festkörpergehalts und/oder die Zugabe von Wasser führt jedoch zu einer nicht akzeptablen Verschlechterung der anwendungstechnischen Eigenschaften von Beschichtungsstoff und Beschichtung.

In der nicht vorveröffentlichten deutschen Patentanmeldung DE 199 14 899.6 wird ein aus mindestens drei Komponenten bestehender, wäßriger Beschichtungsstoff beschrieben, der eine Komponente (I), enthaltend mindestens ein oligomeres oder polymeres Harz mit funktionellen Gruppen, die mit Isocyanatgruppen reagieren, als Bindemittel (A), eine Komponente (II), enthaltend mindestens ein Polyisocyanat als Vernetzungsmittel (B) und eine Komponente (III), welche Wasser enthält, umfaßt, wobei die Komponente (I) und/oder (III) mindestens einen niedermolekularen und/oder oligomeren, im wesentlichen unverzweigten, hydrophoben Polyester (C) mit mindestens zwei Hydroxylgruppen im Molekül, einer OH-Zahl von 56 bis 500 mg KOH/g, einer Säurezahl <10 mg KOH/g und einem zahlenmittleren Molekulargewicht Mn von 450 bis 2.000 Dalton enthält oder enthalten.

Aufgabe der vorliegenden Erfindung ist es, einen neuen thermisch oder thermisch und mit aktinischer Strahlung härtbaren, nicht wäßrigen Beschichtungsstoff bereitzustellen, der durch eine einfache stoffliche Variation bekannter Beschichtungsstoffe erhältlich ist, eine lange Topfzeit aufweist und dennoch bei Raumtemperatur oder leicht erhöhter Temperatur rasch aushärtet und Beschichtungen liefert, die sehr gute mechanische Eigenschaften sowie eine sehr gute Glanzhaltung, Rißbeständigkeit, Fülle und Verlauf, Abklebebeständigkeit, Lösemittelbeständigkeit und Oberflächenhärte aufweisen, wobei die VOC die vorgeschriebenen Grenzwerte unterschreitet, ohne daß die vorteilhaften Eigenschaftsprofile von Beschichtungsstoff und Beschichtung verlorengehen.

Demgemäß wurde der neue thermisch oder thermisch und mit aktinischer Strahlung härtbare, nicht wäßrige Beschichtungsstoff gefunden, enthaltend
(A) eine hydroxygruppenhaltige Bindemittelkomponente, enthaltend
   (A 1) mindestens einen hydroxygruppenhaltigen Polyester und
   (A 2) mindestens ein hydroxygruppenhaltiges (Meth)Acrylatcopolymerisat, das zumindest teilweise in der Gegenwart des Polyesters (A 1) hergestellt worden ist,
(B) mindestens eine Vernetzungsmittellkomponente, enthaltend mindestens ein Polyisocyanat, und
(C) mindestens einen niedermolekularen und/oder oligomeren, im wesentlichen unverzweigten, hydrophoben Polyester mit mindestens zwei Hydroxylgruppen im Molekül, einer OH-Zahl von 56 bis 500 mg KOH/g, einer Säurezahl <10 mg KOH/g und einem zahlenmittleren Molekulargewicht Mn von 300 bis 2.000 Dalton, wobei der Polyester (C) die allgemeine Formel I aufweist

   **[R**^{**1**}**-CH(OH)-CH**_{**2**}**-OOC-]**_{**2**}**R** (I),

   worin die Variablen die folgende Bedeutung haben:
   - R =: substituierter oder unsubstituierter zweiwertiger C₁- bis C₂₀-Alkandiyl-, C₂- bis C₂₀-Alkendiyl-, C₄- bis C₂₀-Cycloalkandiyl- oder -Cycloalkendiyl-, C₆- bis C₁₂-Aryliden- oder zweiwertiger C₆- bis C₂₀-Arylalkyl-, -Arylalkenyl-, -Arylcycloalkyl-, oder -Arylcycloalkenylrest; oder
   substituierter oder unsubstituierter zweiwertiger aliphatischer, cycloaliphatischer, acyclischer oder cyclischer olefinisch ungesättigter, aromatischer, aliphatisch-aromatischer, cycloaliphatisch-aromatischer, acyclisch-ungesättigt-aromatischer oder cyclisch-ungesättigt-aromatischer Rest, welcher mindestens eine Carbonsäureestergruppe enthält;
   - R¹ =: Wasserstoffatom oder einwertiger substituierter oder unsubstituierter C₁- bis C₂₀-Alkyl-, C₂- bis C₂₀-Alkenyl-, C₄-bis C₁₂-Cycloalkyl- oder -Cycloalkenyl-, C₆- bis C₁₂-Aryl- oder C₆- bis C₂₀-Arylalkyl-, -Arylalkenyl-, -Arylcycloalkyl-, -Arylcycloalkenyl-, - Alkylaryl-, -Alkenylaryl-, -Cycloalkylaryl-, -Cycloalkenylaryl-, -Alkylcycloalkyl-, -Alkylcycloalkenyl-, -Alkenylcycloalkyl-, -Alkenylcycloalkenyl-, -Cycloalkylalkyl-, -Cycloalkenylalkyl-, -Cycloalkylalkenyl- oder -Cycloalkenylalkenylrest.

Im folgenden wird der neue thermisch oder thermisch und mit aktinischer Strahlung härtbare, nicht wäßrige Beschichtungsstoff als "erfindungsgemäßer Beschichtungsstoff" bezeichnet.

Weitere erfindungsgemäße Gegenstände ergeben sich aus der Beschreibung.

Im Hinblick auf den Stand der Technik war es überraschend und für den Fachmann nicht vorhersehbar, daß die Aufgabe, die der vorliegenden Erfindung zugrundelag, durch die Verwendung der Polyester (C) gelöst werden konnte, stand es doch im Gegenteil zu erwarten, daß die Zugabe des Polyesters (C) zu den bekannten Beschichtungsstoffen deren Eigenschaftsprofil sowie das Eigenschaftsprofil der hieraus hergestellten Beschichtungen in nicht vorhersehbarer, nachteiliger Weise ändern würde. So aber führte die erfindungsgemäße Zugabe der Polyester (C) zu der Lösung der geschilderten Probleme, ohne daß die stoffliche Zusammensetzung der bekannten Beschichtungsstoffe ganz grundlegend geändert werden mußte.

Der erfindungsgemäße Beschichtungsstoff ist thermisch oder thermisch und mit aktinischer Strahlung härtbar. Dabei ist er thermisch fremdvernetzend.

Im Rahmen der vorliegenden Erfindung werden Bindemittel als "fremdvernetzend" bezeichnet, wenn sie eine Art von komplementären reaktiven funktionellen Gruppen (vorliegend Hydroxylgruppen) enthalten, die mit einer anderen Art von komplementären reaktiven funktionellen Gruppen in einem Härter oder Vernetzungsmittel (vorliegend Isocyanatgruppen) Vernetzungsreaktionen eingehen können. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen.

Im Rahmen der vorliegenden Erfindung ist unter aktinischer Strahlung elektromagnetische Strahlung wie nahes Infrarot (NIR), sichtbares Licht, UV-Strahlung oder Röntgenstrahlung, insbesondere UV-Strahlung, und Korpuskularstrahlung wie Elektronenstrahlung zu verstehen.

Von der Fachwelt wird die gemeinsame Anwendung von thermischer Härtung und Härtung mit aktinischer Strahlung auch als Dual Cure bezeichnet.

Im folgenden werden die einzelnen Bestandteile des erfindungsgemäßen Beschichtungsstoffs näher erläutert.

Das erfindungsgemäße Beschichtungsstoff enthält eine hydroxylgruppenhaltige Bindemittelkomponente (A), die aus
(A 1) 20 bis 60 Gew.-%, bevorzugt 30 bis 50 Gew.-%, mindestens eines Polyesters und
(A 2) 40 bis 80 Gew.-%, bevorzugt 50 bis 70 Gew.-%, mindestens eines hydroxylgruppenhaltigen (Meth)Acrylatcopolymerisats, das zumindest teilweise in Gegenwart des Polyester (A 1) hergestellt worden ist,
besteht.

Die Bindemittelkomponente (A) weist dabei bevorzugt eine Hydroxylzahl von 80 bis 150, besonders bevorzugt von 85 bis 105 mgKOH/g und eine Säurezahl von 0,1 bis 10, bevorzugt von 4 bis 8 mgKOH/g, auf

Es ist erfindungswesentlich, daß der Polyester (A 1) eine OH-Zahl von 90 bis 130, bevorzugt von 90 bis 110 mgKOH/g, eine Säurezahl von weniger als 10 mgKOH/g, bevorzugt von 1 bis 8 mgKOH/g, ein zahlenmittleres Molekulargewicht von 1.300 bis 3.500, bevorzugt von 1.350 bis 2.000 und eine Uneinheitlichkeit von 5 bis 50, bevorzugt von 5 bis 10, aufweist. Die Uneinheitlichkeit ist dabei definiert als Verhältnis von gewichtsmittlerem Molekulargewicht zu zahlenmittlerem Molekulargewicht. Die Molekulargewichte werden jeweils gelpermeations-chromatographisch gegen Polystyrolstandard bestimmt.

Die Polyester (A 1) sind bevorzugt erhältlich durch Umsetzung von
p1) Polycarbonsäuren oder deren veresterungsfähigen Derivaten, ggf. zusammen mit Monocarbonsäuren,
p2) Polyolen, ggf. zusammen mit Monoolen,
p3) ggf. weiteren modifizierenden Komponenten und
p4) ggf. einer mit dem Reaktionsprodukt aus (p1), (p2) und ggf. (p3) reaktionsfähigen Komponente.

Als Beispiele für Polycarbonsäuren, die als Komponente (p1) eingesetzt werden können, seien aromatische, aliphatische und cycloaliphatische Polycarbonsäuren genannt. Bevorzugt werden als Komponente (p1) aromatische und/oder aliphatische Polycarbonsäuren eingesetzt.

Beispiele für geeignete Polycarbonsäuren sind Phthalsäure, Isophthalsäure, Terephthalsäure, Halogenphthalsäuren, wie Tetrachlor- bzw. Tetrabromphthalsäure, Adipinsäure, Glutarsäure, Acelainsäure, Sebacinsäure, Fumarsäure, Maleinsäure, Trimellithsäure, Pyromellithsäure, Tetrahydrophthalsäure, Hexahydrophthalsäure, 1,2-Cyclohexandicarbonsäure, 1,3-Cyclohexandicarbonsäure, 1,4-Cyclohexandicarbonsäure, 4-Methylhexahydrophthalsäure, Endomethylentetrahydrophthalsäure, Tricyclodecan-Dicarbonsäure, Endoethylenhexahydrophthalsäure, Camphersäure, Cyclohexantetracarbonsäure, Cyclobutantetracarbonsäure u.a. Die cycloaliphatischen Polycarbonsäuren können sowohl in ihrer cis- als auch in ihrer transForm sowie als Gemisch beider Formen eingesetzt werden. Geeignet sind auch die veresterungsfähigen Derivate der obengenannten Polycarbonsäuren, wie z.B. deren ein- oder mehrwertige Ester mit aliphatischen Alkoholen mit 1 bis 4-C-Atomen oder Hydroxyalkoholen mit 1 bis 4 C-Atomen. Außerdem können auch die Anhydride der obengenannten Säuren eingesetzt werden, sofern sie existieren.

Gegebenenfalls können zusammen mit den Polycarbonsäuren (p1) auch Monocarbonsäuren (p1) eingesetzt werden, wie beispielsweise Benzoesäure, tert.-Butylbenzoesäure, Laurinsäure, Isononansäure und Fettsäuren natürlich vorkommender Öle. Bevorzugt wird als Monocarbonsäure Isononansäure eingesetzt.

Geeignete Alkoholkomponenten (p2) zur Herstellung des Polyesters bzw. Alkydharzes (A 1) sind mehrwertige Alkohole, wie Ethylenglykol, Propandiole, Butandiole, Hexandiole, Neopentylglykol, Diethylenglykol, Cyclohexandiol, Cyclohexandimethanol, Trimethylpentandiol, Ethylbutylpropandiol Ditrimethylolpropan, Trimethylolethan, Trimethylolpropan, Glycerin, Pentaerythrit, Dipentaerythrit, Trishydroxyethylisocyanat, Polyethylenglykol, Polypropylenglykol, gegebenenfalls zusammen mit einwertigen Alkoholen (p2), wie beispielsweise Butanol, Octanol, Laurylalkohol, ethoxylierten bzw. propoxylierten Phenolen.

Als Komponente (p3) zur Herstellung der Polyester (A 1) geeignet sind insbesondere Verbindungen, die eine gegenüber den funktionellen Gruppen des Polyesters reaktive Gruppe aufweisen, ausgenommen die als Komponente (p4) genannten Verbindungen. Als modifizierende Komponente (p3) werden bevorzugt Polyisocyanate und/oder Diepoxidverbindungen, gegebenenfalls auch Monoisocyanate und/oder Monoepoxidverbindungen verwendet. Geeignete Komponenten (p3) werden beispielsweise in der DE 40 24 204 A 1 auf Seite 4, Zeilen 4 bis 9, beschrieben.

Als Komponente (p4) zur Herstellung der Polyester bzw. Alkydharze (A 1) geeignet sind Verbindungen, die außer einer gegenüber den funktionellen Gruppen des Polyesters (A 1) reaktiven Gruppe noch eine tertiäre Aminogruppe aufweisen, beispielsweise Monoisocyanate mit mindestens einer tertiären Aminogruppe oder Mercaptoverbindungen mit mindestens einer tertiären Aminogruppe. Wegen Einzelheiten wird auf die DE 40 24 204, Seite 4, Zeilen 10 bis 49, A 1 verwiesen.

Die Herstellung der Polyester (A 1) erfolgt nach den bekannten Methoden der Veresterung [vgl. verschiedene Standardwerke, wie z. B.:
1. Temple C. Patton, Alkyd Resin Technology, Interscience Publishers John Wiley & Sons, New York, London 1962;
2. Dr. Johannes Scheiber, Chemie und Technologie der künstlichen Harze, Wissenschaftliche Verlagsgesellschaft mbH, Stuttgart, 1943;
3. Hans Wagner + Hans-Friedrich Sarx, Lackkunstharze, 4. Auflage, Karl Hanser Verlag, München, 1959;
4. Ullmanns Encyklopädie der technischen Chemie, Band 14, Seiten 80 bis 106 (1963)].

Die Umsetzung erfolgt dabei üblicherweise bei Temperaturen zwischen 180 und 280°C, ggf. in Gegenwart eines geeigneten Veresterungskatalysators, wie z.B. Lithiumoctoat, Dibutylzinnoxid, Dibutylzinndilaurat, para-Toluolsulfonsäure u. ä..

Üblicherweise wird die Herstellung der Polyester (A 1) in Gegenwart geringer Mengen eines geeigneten Lösemittels als Schleppònittel durchgeführt. Als Schleppmittel werden z. B. aromatische Kohlenwasserstoffe, wie insbesondere Xylol und (cyclo)aliphatische Kohlenwasserstoffe, z. B. Cyclohexan, eingesetzt.

Die als Komponente (A 2) in den erfindungsgemäßen Beschichtungsstoffen eingesetzten (Meth)Acrylatcopolymerisate weisen OH-Zahlen von 50 bis 150 mg KOH/g, bevorzugt 70 bis 105 mg KOH/g und Säurezahlen von 0 bis 10 mg KOH/g, bevorzugt 0 bis 8 mg KOH/g, auf, wobei die OH-Zahlen und Säurezahlen jeweils ohne Berücksichtigung des Polyesteranteils (A 1) berechnet sind. Die zahlenmittleren Molekulargewichte der in Gegenwart der Polyester (A 1) hergestellten (Meth)Acrylatcopolymerisate (A 2) liegen üblicherweise zwischen 1.500 und 5.000, bevorzugt zwischen 2.000 und 4.000, gemessen jeweils mit GPC gegen Polystyrolstandard.

Es ist erfindungswesentlich, daß das (Meth)Acrylatcopolymerisat (A 2) zumindest teilweise in Gegenwart des Polyesterharzes (A 1) hergestellt worden ist.

Vorteilhafterweise werden mindestens 30 Gew.-% und bevorzugt mindestens 40 Gew.-% der Komponente (A 2) in Gegenwart der Komponente (A 1) hergestellt.

Die ggf. restliche Menge der Komponente (A 2) wird der Bindemittellösung bzw. dem Beschichtungsstoff anschließend zugegeben. Dabei ist es möglich, daß dieses bereits polymerisierte (Meth)Acrylatcopolymerisat (A 2) die gleiche Monomerzusammensetzung aufweist wie das in Gegenwart des Polykondensationsharzes (A 1) aufgebaute (Meth)Acrylatcopolymerisat (A 2). Es kann aber auch ein hydroxylgruppenhaltiges Polyadditions- und/oder Polykondensationsharz mit einer unterschiedlichen Monomerzusammensetzung zugefügt werden. Außerdem ist es möglich, eine Mischung verschiedener Polyadditionsharze (A 2) und/oder Polykondensationsharze (A 1) zuzufügen, wobei ggf. ein Harz die gleiche Monomerzusammensetzung aufweist wie das in Gegenwart des Polykondensationsharzes (A 1) aufgebaute Polyadditionsharz (A 2).

Es ist ferner erfindungswesentlich, daß das (Meth)Acrylatcopolymerisat (A 2) ein oder mehrere Monomere, ausgewählt aus der Gruppe der Hydroxyalkylester der Acrylsäure, Methacrylsäure oder einer anderen alpha, beta-ethylenisch ungesättigten Carbonsäure, die sich von Alkylenglykolen ableiten, die mit den Säuren verestert sind, oder durch Umsetzung der Säuren mit Alkylenoxiden erhältlich sind, insbesondere Hydroxyalkylester der Acrylsäure, Methacrylsäure oder Ethacrylsäure, in denen die Hydroxyalkylgruppe bis zu 20 Kohlenstoffatorne enthält, wie 2-Hydroxyethyl-, 2-Hydroxypropyl-, 3-Hydroxypropyl-, 3-Hydroxybutyl- oder 4-Hydroxybutylacrylat, -methacrylat, -ethacrylat oder -crotonat; 1,4-Bis(hydroxymethyl)cyclohexan-, Octahydro-4,7-methano-1H-inden-dimethanol- oder Methylpropandiolmonoacrylat, -monomethacrylat, -monoethacrylat oder -monocrotonat; Umsetzungsprodukte aus cyclischen Estern, wie z.B. ε-Caprolacton und diesen Hydroxyalkylestern; Umsetzungsprodukte aus Acrylsäure und/oder Methacrylsäure mit dem Glycidylester einer Carbonsäure mit einem tertiären α-C-Atom (Diese Glycidylester von am α-C-Atom verzweigten Carbonsäuren mit 11 bis 13 C-Atomen (Versatic®säure) sind beispielsweise unter dem Namen Cardura® der Firma Shell im Handel erhältlich, die Umsetzung der Acryl- und/oder Methacrylsäure mit dem Glycidylester kann dabei vor, während oder nach der Polymerisation erfolgen); als Monomerkomponenten einpolymerisiert enthält.

Bevorzugt enthält das Acrylatharz (A2) ein oder mehrere Monomere, ausgewählt aus der Gruppe 4-Hydroxy-n-butyl-acrylat, 4-Hydroxy-n-butylmethacrylat, 3-Hydroxy-n-butylacrylat und/oder 3-Hydroxy-n-butylmethacrylat, ggf. zusammen mit Hydroxyethylmethacrylat.

Die Herstellung der erfindungsgemäß eingesetzten (Meth)Acrylatcopolymerisate (A 2) kann nach allgemein gut bekannten Polymerisationsverfahren erfolgen. Polymerisationsverfahren zur Herstellung von (Meth)Acrylatcopolymerisaten sind allgemein bekannt und vielfach beschrieben (vgl. z.B.: Houben-Weyl, Methoden der organischen Chemie, 4. Auflage, Band 14/1, Seiten 24 bis 255 (1961) oder deutschen Patentanmeldung DE 40 24 204 A 1, Seite 4, Zeile 66, bis Seite 7, Zeile 38).

Die erfindungsgemäß eingesetzten (Meth)Acrylatcopolymerisate (A 2) werden vorzugsweise mit Hilfe des Lösungspolymerisationsverfahrens hergestellt. Hierbei wird üblicherweise ein organisches Lösemittel bzw. Lösemittelgemisch zusammen mit dem Polyester (A 1) vorgelegt und zum Sieden erhitzt. In diese Mischung aus organischem Lösemittel bzw. Lösemittelgemisch und Polyesterharz (A 1) werden dann das zu polymerisierende Monomerengemisch sowie ein oder mehrere Polymerisationsinitiatoren kontinuierlich zugegeben. Die Polymerisation erfolgt bei Temperaturen zwischen 100 und 160°C, vorzugsweise zwischen 130 und 150°C.

Die Polymerisation wird bevorzugt in mindestens einem hochsiedenden, organischen, gegenüber den eingesetzten Monomeren inerten Lösemittel (E) durchgeführt. Beispiele für geeignete Lösemittel sind höher substituierte Aromaten, wie z.B. Solvent Naphtha®, Schwerbenzin, verschiedene Solvesso®-Typen, verschiedene Shellsol®-Typen und Deasol® sowie höhersiedende aliphatische und cycloaliphatische Kohlenwasserstoffe, wie z.B. verschiedene Testbenzine, Mineralterpentinöl, Tetralin und Dekalin sowie verschiedene Ester, wie z.B. Ethylglykolacetat, Butylglykolacetat, Ethyldiglykolacetat u.ä..

Als Polymerisationsinitiatoren werden vorzugsweise freie Radikale bildende Initiatoren eingesetzt. Initiatorart und -menge werden üblicherweise so gewählt, daß bei der Polymerisationstemperatur während der Zulaufphase ein möglichst konstantes Radikalangebot vorliegt.

Als Beispiele für einsetzbare Initiatoren werden genannt: Di-tert.-Butylperoxid, tert.-Butylhydroperoxid, tert.-Butylperoxybenzoat, tert.-Butylperoxypivalat, tert.-Butylperoxy-3,5,5-trimethylhexanoat, tert.-Butylperoxy-2-ethylhexanoat, Dicumylperoxid, Cumylhydroperoxid, tert.-Amylperoxybenzoat, tert.-Amylperoxy-2-ethylhexanoat, Diacylperoxide, wie z.B. Diacetylperoxid, Peroxyketale, 2,2-Di-(tert.-amylperoxy-)propan, Ethyl-3,3-di-(tert.-amylperoxi-)butyrat und thermolabile hochsubstituierte Ethanderivate" beispielsweise auf Basis silylsubstituierter Ethanderivate und auf Basis Benzpinakol. Weiterhin können auch aliphatische Azoverbindungen, wie beispielsweise Azoisovaleronitril und Azobiscyclohexannitril, eingesetzt werden.

Vor allem werden tert.-Butylgruppen enthaltende Initiatoren, wie z.B. Di-tert.-butylperoxid, tert.-Butylhydroperoxid, 2,2-Di-tert.-butylperoxybutan und 1,3-Bis-(tert.-butylperoxyisopropyl)benzol, eingesetzt, da sie eine Pfropfung des (Meth)Acrylatcopolymerisats (A 2) auf den Polyester (A 1) fördern.

Die Initiatormenge beträgt in den meisten Fällen 0,1 bis 8 Gew.-%, bezogen auf die zu verarbeitende Monomerenmenge, sie kann ggf. aber auch höher liegen. Der Initiator, gelöst in einem Teil des für die Polymerisation eingesetzten Lösemittels, wird allmählich während der Polymerisationsreaktion zudosiert. Bevorzugt dauert der Initiatorzulauf etwa 0,5 bis 2 Stunden länger als der Monomerenzulauf, um so auch eine gute Wirkung während der Nachpolymerisationsphase zu erzielen. Bei einer anderen bevorzugten Herstellungsvariante wird mit dem Initiatorzulauf etwa 15 Minuten vor der Zugabe der Monomeren begonnen, um so ein hohes Radikalangebot zu Beginn der Polymerisation bereitzustellen. Werden Initiatoren mit nur einer geringen Zerfallsrate unter den vorliegenden Reaktionsbedingungen eingesetzt, so ist es auch möglich, den Initiator vorzulegen.

Die Polymerisationsbedingungen (Reaktionstemperatur, Zulaufzeit der Monomerenmischung, Menge und Art der organischen Lösemittel und Polymerisationsinitiatoren, eventuelle Mitverwendung von Molekulargewichtsreglern, wie z.B. Mercaptanen, Thiolglykolsäureestem und Chlorwasserstoffen) werden so ausgewählt, daß die erfindungsgemäß eingesetzten (Meth)Acrylatcopolymerisate (A 2) das gewünschte Molekulargewicht aufweisen.

Die Säurezahl der erfindungsgemäß eingesetzten (Meth)Acrylatcopolymerisate (A 2) kann vom Fachmann durch Einsatz entsprechender Mengen carboxylgruppenhaltiger Monomerer eingestellt werden. Analoges gilt für die Einstellung der Hydroxylzahl. Sie ist über die Menge an eingesetzten hydroxylgruppenhaltigen Monomeren steuerbar.

Bevorzugt werden als Komponente (A 2) hydroxylgruppenhaltige (Meth)Acrylatcopolymerisate eingesetzt, die erhältlich sind, indem
(a) 5 bis 95 Gew.-%, bevorzugt 45 bis 85 Gew.-%, eines oder mehrerer Monomerer, ausgewählt aus der Gruppe der vorstehend beschriebenen hydroxylgruppenhaltigen, ethylenisch ungesättigten, copolymerisierbaren Monomeren;
(b) 5 bis 95 Gew.-%, bevorzugt 15 bis 55 Gew.-%, eines von (a) verschiedenen, aliphatischen und/oder cycloaliphatischen Esters der Methacryl- und/oder Acrylsäure oder eines Gemisches aus solchen Monomeren;
(c) 0 bis 30 Gew.-%, bevorzugt 5 bis 15 Gew.-%, eines von (a) und (b) verschiedenen, copolymerisierbaren Vinylesters oder eines Gemisches aus solchen Monomeren;
(d) 0 bis 85 Gew.-%, bevorzugt 15 bis 60 Gew.-%, eines von (a), (b) und (c) verschiedenen, vinylaromatischen Kohlenwasserstoffs oder eines Gemisches aus solchen Monomeren und
(e) 0 bis 10 Gew.-%, bevorzugt 0 bis 8 Gew.-%, eines von (a), (b), (c) und (d) verschiedenen, weiteren ethylenisch ungesättigten Monomers oder eines Gemisches aus solchen Monomeren
zumindest teilweise in Gegenwart der Komponente (A 1) zu dem (Meth)Acrylatcopolymerisat (A 2) polymerisiert werden, wobei die Summe der Gewichtsanteile der Monomeren (a) bis (e) jeweils 100 Gew.-% beträgt.

Als Monomer (b) kann im Prinzip jeder von (a) verschiedene aliphatische oder cycloaliphatische Ester der Acrylsäure oder der Methacrylsäure oder ein Gemisch aus solchen Monomeren eingesetzt werden. Als Beispiele werden genannt: aliphatische Ester der Acrylsäure und der Methacrylsäure, wie z.B. Methyl-, Ethyl-, Propyl-, n-Butyl-, iso-Butyl-, tert.-Butyl, n-Hexyl-, 2-Ethylhexyl-, Stearyl- und Laurylacrylat sowie -methacrylate und cycloaliphatische Ester der (Meth)Acrylsäure wie z. B. Furfuryl-, Cyclohexyl-, Isobornyl-, t-Butylcyclohexylacrylat und -methacrylat.

Als Monomere (c) werden Vinylester von Monocarbonsäuren eingesetzt. Bevorzugt werden Vinylester von in α-Stellung verzweigten Monocarbonsäuren mit 5 bis 15 C-Atomen je Molekül eingesetzt. Die verzweigten Monocarbonsäuren können erhalten werden durch die Umsetzung von Ameisensäure oder Kohlenmonoxid und Wasser mit Olefinen in Anwesenheit eines flüssigen, stark sauren Katalysators; die Olefine können Crackprodukte von paraffinischen Kohlenwasserstoffen, wie Mineralölfraktionen sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können auch auf an sich bekannte Weise aus den Säuren hergestellt werden, z.B. indem man die Säuren mit Acetylen reagieren läßt.

Besonders bevorzugt werden - wegen der guten Verfügbarkeit - Vinylester von gesättigten aliphatischen Monocarbonsäuren mit 9 - 11 C-Atomen, die am α-C-Atom verzweigt sind.

Besonders bevorzugt ist außerdem der Vinylester der p-ter.-Butylbenzoesäure. Beispiele für weitere, geeignete Vinylester sind Vinylacetat und Vinylpropionat.

Als Monomere (d) werden vinylaromatische Kohlenwasserstoffe, wie Styrol, α-Alkylstyrole, wie α-Methylstyrole, Chlorstyrole, o-, m- und p-Methylstyrol, 2,5-Dimethylstyrol, p-Methoxystyrol, p-tert.-Butylstyrol, p-Dimethylaminostyrol, p-Acetamidostyrol und Vinyltoluol, eingesetzt, wobei bevorzugt Vinyltoluole und insbesondere Styrol eingesetzt werden.

Als Komponente (e) kann im Prinzip jedes von (a), (b), (c) und (d) verschiedene ethylenisch ungesättigte Monomer oder ein Gemisch aus solchen Monomeren eingesetzt werden. Als Beispiele für Monomere, die als Komponente (f) eingesetzt werden können, werden genannt: carboxylgruppenhaltige Monomere, wie z.B. Acryl- und/oder Methacrylsäure; Amide der Acrylsäure und Methacrylsäure, wie z.B. Methacrylamid und Acrylamid; Nitrile der Methacrylsäure und Acrylsäure; Vinylether und Vinylester.

Der weitere wesentliche Bestandteil des erfindungsgemäßen Beschichtungsstoffs ist mindestens eine Vernetzungsmittelkomponente (B). Sie enthält mindestens ein Polyisocyanat oder besteht aus diesem.

Beispiele geeigneter Polyisocyanate (B) sind organische Polyisocyanate mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül. Gegebenenfalls können den Polyisocyanaten noch geringe Mengen organischer Lösemittel, bevorzugt 1 bis 25 Gew.%, bezogen auf reines Polyisocyanat, zugegeben werden, um so die Einarbeitbarkeit der Polyisocyanate zu verbessern. Als Zusatzmittel geeignete Lösemittel für die Polyisocyanate sind beispielsweise Ethoxiethylpropionat, Butylacetat und ähnliches.

Beispiele für geeignete Polyisocyanate (B) sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Ann. Chem. 562, 75 bis 136, beschrieben.

Beispielsweise geeignet sind 1,2-Ethylendiisocyanat, 1,4-Tetramethylendiisocyanat, 1,6-Hexamethylendiiso-cyanat, 2,2,4- bzw. 2,4,4-Trimethyl-1,6-hexamethylendi-isocyanat, 1,12-Dodecandiisocyanat, ω,ω'-Diisocyanato-dipropylether, Cyclobutan-1,3-diisocyanat, Cyclo-hexan-1,3- und -1,4-diisocyanat, 2,2- und 2,6-Diiso-cyanato-1-methylcyclohexan, 3-Isocyanatomethyl-3,5,5-trimethylcyclohexylisocyanat("Isophorondiisocyanat"), 2,5- und 3,5-Bis(isocyanatomethyl)-8-methyl-1,4-methano-decahydronaphthalin, 1,5-, 2,5-, 1,6- und 2,6-Bis(isocyanatomethyl)-4,7-methanohexahydroindan, 1,5-, 2,5-, 1,6- und 2,6-Bis(isocyanato)-4,7-methan-hexahydroindan, Dicyclohexyl-2,4'- und -4,4'-diiso-cyanat, 2,4- und 2,6-Hexahydrotoluylendiisocyanat, Perhydro-2,4'- und -4,4'-diphenylmethandiisocyanat, ω,ω-Diisocyanato-1,4-diethylbenzol, 1,3- und 1,4-Phenylendiisocyanat, 4,4'-Diisocyanato-diphenyl, 4,4'-Diisocyanato-3,3'-dichlordiphenyl, 4,4'-Diisocyanato-3,3'-dimethoxi-diphenyl, 4,4'-Diisocyana-to-3,3'-dimethyl-diphenyl, 4,4'-Diisocyanato-3,3'-di-phenyl-diphenyl, 2,4'- und 4,4'-Diisocyanato-diphenylmethan, Naphthylen-1,5-diisocyanat, Toluylendiisocyana-te, wie 2,4- bzw. 2,6-Toluylendiisocyanat, N,N'-(4,4'-Dimethyl-3,3'-diisocyanatodiphenyl)-uretdion, m-Xylylendiisocyanat, Dicyclohexyl-methandiisocyanat, Tetramethylxylylendiisocyanat, aber auch Triisocyanate, wie 2,4,4'-Triisocyanatodiphenyl-ether, 4,4',4"-Triisocyanatotriphenylmethan. Bevorzugt werden, ggf. in Kombination mit den obengenannten Polyisocyanaten, Isocyanuratgruppen, Biuretgruppen, Allophanatgruppen, Uretdiongruppen, Iminooxadiazindiongruppen, Urethangruppen und/oder. Harnstoffgruppen aufweisende Polyisocyanate eingesetzt. Urethangruppen aufweisende Polyisocyanate werden beispielsweise durch Umsetzung eines Teils der Isocyanatgruppen mit Polyolen, wie z.B. Trimethylolpropan und Glycerin, erhalten.

Vorzugsweise werden aliphatische oder cycloaliphatische Polyisocyanate (B), insbesondere Hexamethylendiisocyanat, dimerisiertes und trimerisiertes Hexamethylendiisocyanat, Isophorondiisocyanat, Dicyclohexylmethan-2,4'-diisocyanat oder Dicyclohexylmethan-4,4'-diisocyanat oder Mischungen aus diesen Polyisocyanaten eingesetzt. Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt. Die Vernetzungsmittelkomponente (B) kann im übrigen auch aus beliebigen Gemischen der beispielhaft genannten Polyisocyanate (B) bestehen.

Die Menge der eingesetzten Polyisocyanate (B) wird so gewählt, daß das Verhältnis der Isocyanatgruppen zu den Hydroxylgruppen der Bindemittelkomponente (A) und der Hydroxylgruppen der nachstehend beschriebenen hydrophoben Polyester (C) im Bereich von 1 : 3 bis 3 : 1 liegt. Vorzugsweise enthalten die erfindungsgemäßen Beschichtungsstoffe 15 bis 70 Gew.-% des polyestermodifizierten (Meth)Acrylatcopolymerisats (A 1/A 2), 0 bis 30 Gew.-% der weiteren Bindemittelkomponente (A 1) und/oder (A 2), und 7 bis 50 Gew.-% der Polyisocyanate (B), jeweils bezogen auf den Festkörper des erfindungsgemäßen Beschichtungsstoffs.

Im Rahmen der vorliegenden Erfindung bedeutet "Festkörper" hier und im folgenden der Anteil des erfindungsgemäßen Beschichtungsstoffs, der nach der Aushärtung die Beschichtung bildet.

Der erfindungswesentliche Bestandteil des erfindungsgemäßen Beschichtungsstoffs ist mindestens ein hydrophober Polyester (C).

Die hydrophoben Polyester (C) können niedermolekulare Verbindungen sein, welche ein Molekulargewicht von insbesondere 300 bis 700 Dalton aufweisen. Erfindungsgemäß sind niedermolekulare hydrophobe Polyester (C) von Vorteil, welche unter den Bedingungen der Herstellung und der Applikation des erfindungsgemäßen Beschichtungsstoffs nicht flüchtig sind.

Die hydrophoben Polyester (C) können indes auch oligomere Verbindungen sein, welche ein zahlenmittleres Molekulargewicht Mn von 400 bis 2.000, vorzugsweise von 450 bis 1.500, besonders bevorzugt von 600 bis 1.200 und insbesondere von 650 bis <1.000 aufweisen.

Die niedermolekularen und oligomeren hydrophoben Polyester (C) können einzeln oder als Gemisch verwendet werden.

Die Polyester (C) sind hydrophob. Im Rahmen der vorliegenden Erfindung bezeichnet der Begriff "hydrophob" nach DIN EN ISO 862: 1995-10 die konstitutionelle Eigenschaft eines Moleküls, sich gegenüber Wasser exophil zu verhalten, d. h. es zeigt die Tendenz, in Wasser nicht einzudringen oder die wäßrige Phase zu verlassen.

Die hydrophoben Polyester (C) sind im wesentlichen unververzweigt, d. h., daß ihre Moleküle im Gegensatz zu den nachstehend als Reaktiverdünner beschriebenen Dendrimeren im wesentlichen linear sind.

Die hydrophoben Polyester (C) weisen mindestens 2, vorzugsweise 4 und insbesondere 3 Hydroxylgruppen im Molekül auf. Vorteilhafterweise wird die Anzahl der Hydroxylgruppen so gewählt, daß eine OH-Zahl von 56 bis 500, vorzugsweise 70 bis 450, besonders bevorzugt 80 bis 350 und insbesondere 100 bis 300 mg KOH/g resultiert.

Die hydrophoben Polyester (C) sind im wesentlichen säuregruppenfrei, das heißt, daß sie eine Säurezahl < 3 mg KOH/g aufweisen.

Die nierdermolekularen hydrophoben Polyester (C) weisen die allgemeine Formel I auf,

**[R**^{**1**}**-CH(OH)-CH**_{**2**}**-OOC-]**_{**2**}**R** (I),

worin die Variablen die folgende Bedeutung haben:
- R =: substituierter oder unsubstituierter zweiwertiger C₁- bis C₂₀-Alkandiyl-, C₂- bis C₂₀-Alkendiyl-, C₄- bis C₂₀-Cyloalkandiyl- oder -Cycloalkendiyl-, C₆- bis C₁₂-Aryliden- oder zweiwertiger C₆- bis C₂₀-Arylalkyl-, -Arylalkenyl-, -Arylcycloalkyl-, oder -Arylcycloalkenylrest; oder
substituierter oder unsubstituierter zweiwertiger aliphatischer, cycloaliphatischer, acyclischer oder cyclischer olefinisch ungesättigter, aromatischer, aliphatisch-aromatischer, cycloaliphatisch-aromatischer, acyclisch-ungesättigt-aromatischer oder cyclisch-ungesättigt-aromatischer Rest, welcher mindestens eine Carbonsäureestergruppe enthält;
- R¹ =: Wasserstoffatom oder einwertiger substituierter oder unsubstituierter C₁- bis C₂₀-Alkyl-, C₂- bis C₂₀-Alkenyl-, C₄-bis C₁₂-Cycloalkyl- oder -Cycloalkenyl-, C₆- bis C₁₂-Aryl- oder C₆- bis C₂₀-Arylalkyl-, -Arylalkenyl-, -Arylcycloalkyl-, -Arylcycloalkenyl-, - Alkylaryl-, -Alkenylaryl-, -Cycloalkylaryl-, -Cycloalkenylaryl-, - Alkylcycloalkyl-, -Alkylcycloalkenyl-, -Alkenylcycloalkyl-, -Alkenylcycloalkenyl-, -Cycloalkylalkyl-, -Cycloalkenylalkyl-, -Cycloalkylalkenyl- oder -cycloalkenylalkenylrest.

Beispiele geeigneter C₁- bis C₂₀-Alkandiylreste R sind Methylen, Ethylen, Propan-1,3-diyl, Tetramethylen, Pentamethylen, Hexamethylen, Heptamethylen, Dodecan-1,12-diyl oder Hexadecan-1,16-diyl.

Beispiele geeigneter C₂- bis C₂₀-Alkendiylreste R sind Ethen-1,2-diyl, Propen-1,3-diyl oder Decen-1,12-diyl.

Beispiele geeigneter C₄- bis C₂₀-Cycloalkandiylreste R sind Cyclopentan-1,2- oder -1,3-diyl oder Cyclohexan-1,2-, -1,3- oder -1,4-diyl.

Beispiele geeigneter C₄- bis C₂₀-Cycloalkendiylreste R sind Cyclopenten-1,2- oder -1,3-diyl oder Cyclohexen-1,2-, -1,3- oder -1,4-diyl,

Beispiele geeigneter C₆- bis C₁₂-Arylidenreste R sind 1,2-, 1,3- oder 1,4-Phenylen oder 1,3-, 1,4- oder 2,5-Naphthylen oder 1,4'-Biphenylen.

Beispiele geeigneter zweiwertiger C₆- bis C₂₀-Arylalkylreste R sind

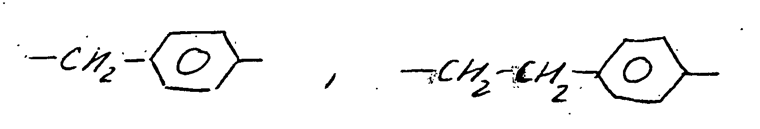

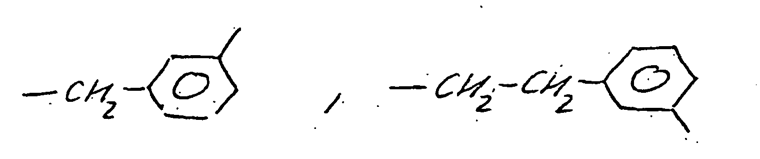

Beispiele geeigneter zweiwertiger Arylalkenylreste sind

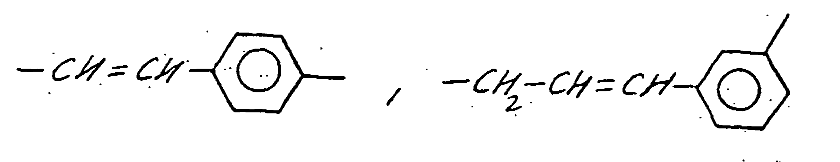

Beispiele geeigneter zweiwertiger Arylcycloalkylreste R sind

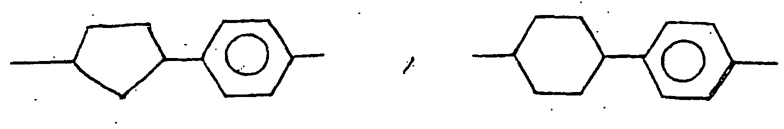

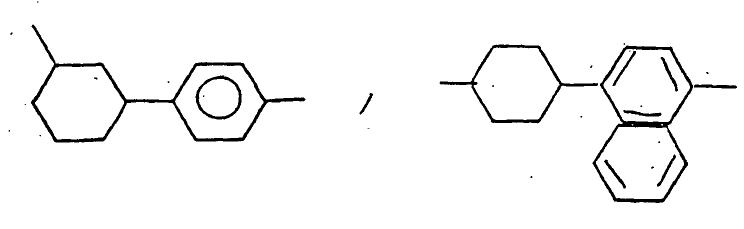

Beispiele geeigneter zweiwertiger Arylcycloalkenylreste R sind

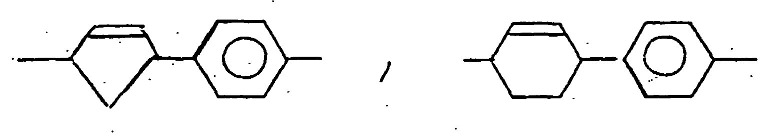

Beispiele geeigneter zweiwertiger aliphatischer, cycloaliphatischer, acyclischer oder cyclischer olefinisch ungesättigter, aromatischer, aliphatisch-aromatischer, cycloaliphatisch-aromatischer, acyclisch-ungesättigt-aromätischer oder cyclisch-ungesättigt-aromatischer Reste R, welche mindestens eine Carbonsäureestergruppe enthalten, sind

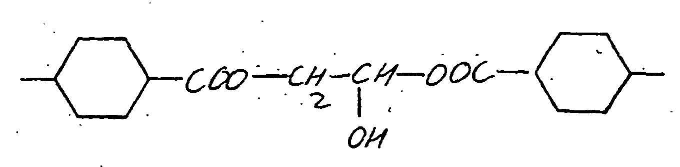

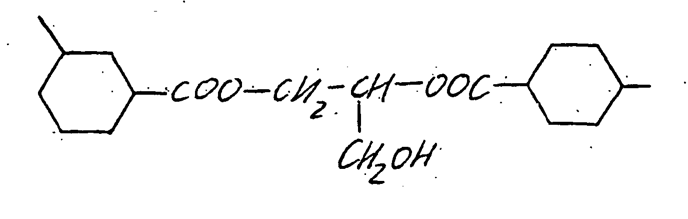

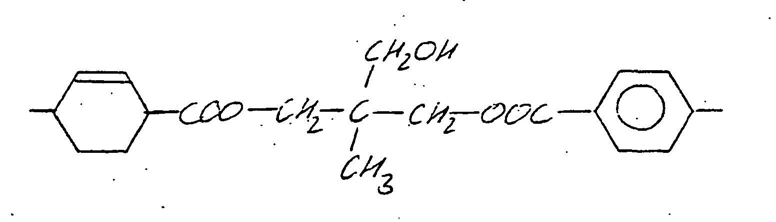

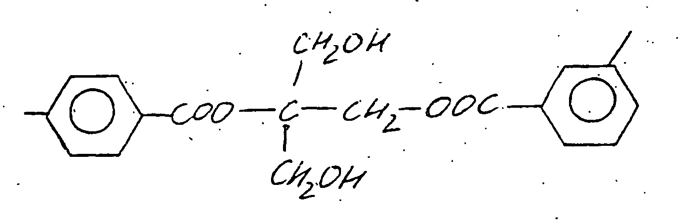

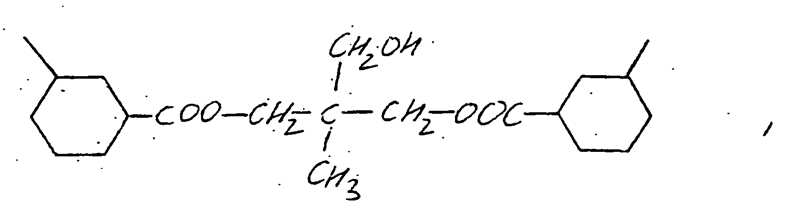

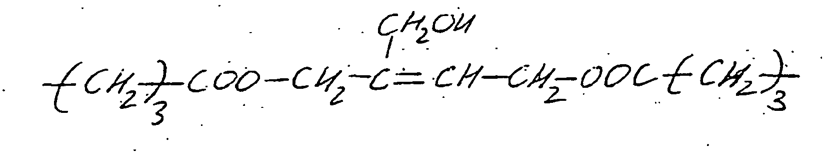

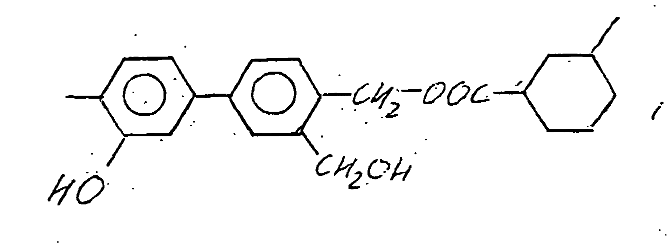

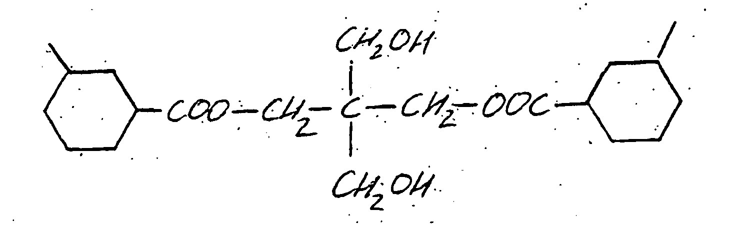

Als Substitutienten für diese Reste R kommen alle organischen funktionellen Gruppen in Betracht, welche im wesentlichen inert sind, d. h., daß sie keine Reaktionen mit den Vernetzungsmitteln (B) eingehen. Beispiele geeigneter inerter organischer Reste sind Halogenatome, Nitrogruppen, Nitrilgruppen oder Alkoxygruppen. Des weiteren kommen als Substitutienten funktionelle Gruppen in Betracht, welche mit den Vernetzungsmitteln (B) Vemetzungsreaktionen eingehen wie Amino-, Thiol- oder Hydroxylgruppen, von denen die Hydroxylgruppen erfindungsgemäß besonders vorteilhaft sind und deshalb besonders bevorzugt verwendet werden.

Erfindungsgemäß ist es von ganz besonderem Vorteil, wenn der Rest R mindestens eine Hydroxylgruppe als Substitutienten enthält.

Beispiele geeigneter erfindungsgemäß zu verwendender, gegebenenfalls substituierter C₁-C₁₀-Alkylreste R¹ sind Methyl-, Ethyl-, Propyl-, Butyl-, Pentyl-, Hexyl-; Heptyl-, Octyl-, Nonyl- oder Decylreste.

Beispiele geeigneter substituierter oder unsubstituierter C₂- bis C₂₀-Alkenyl-, C₄- bis C₁₂-Cycloalkyl- oder -Cycloalkenyl-, C₆- bis C₁₂-Aryl- oder C₆- bis C₂₀-Arylalkyl-, -Arylalkenyl-, -Arylcycloalkyl-, -Arylcycloalkenyl-, -Alkylaryl-, -Alkenylaryl-, -Cycloalkylaryl-, -Cycloalkenylaryl-, -Alkylcycloalkyl-, -Alkylcycloalkenyl-, -Alkenylcycloalkyl-, -Alkenylcycloalkenyl-, -Cycloalkylalkyl-, -Cycloalkenylalkyl-, -Cycloalkylalkenyl- oder -Cycloalkenylalkenylreste R¹ sind -CH=CH₂, -CH₂-CH=CH₂, (̵CH₂)̵₈CH=CH(̵CH₂)̵₃CH₃, -CH₂-CH=CH-CH=CH-CH₃,

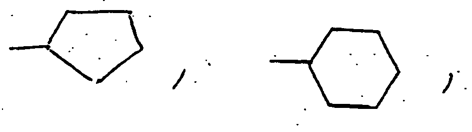

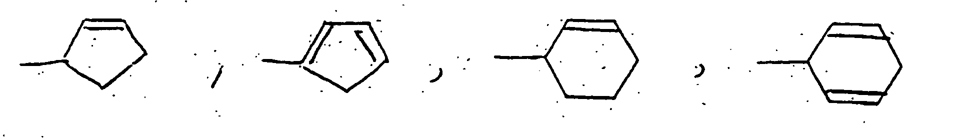

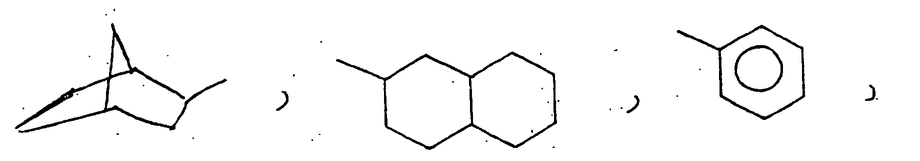

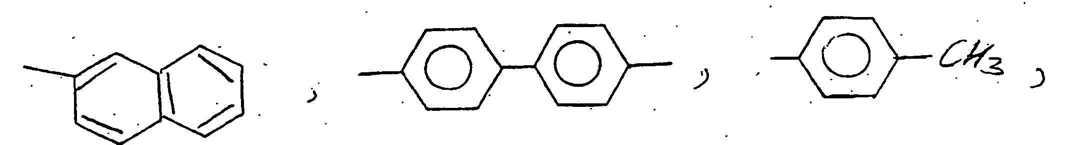

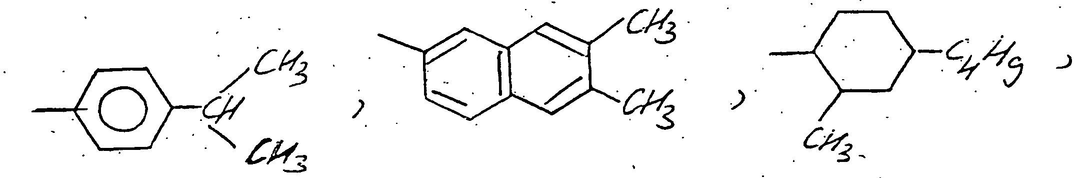

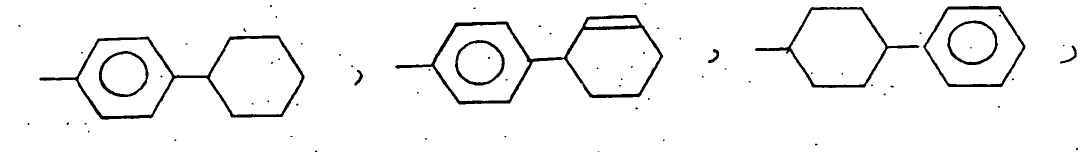

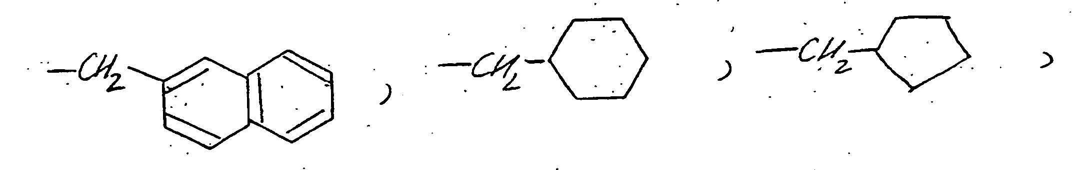

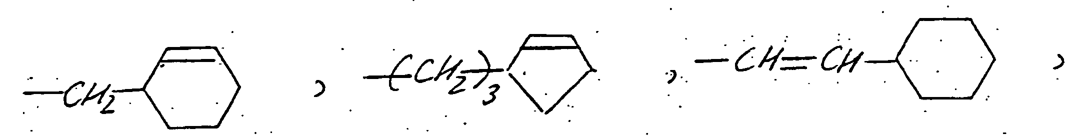

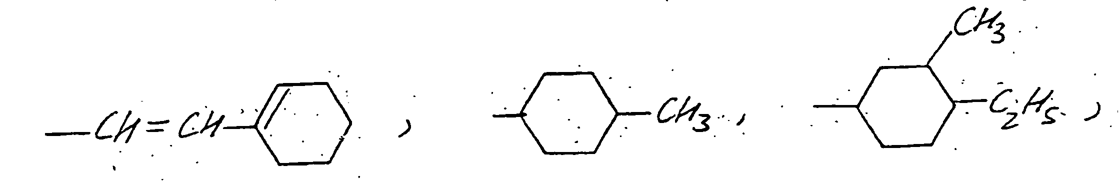

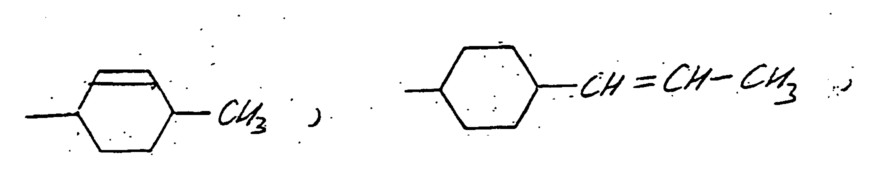

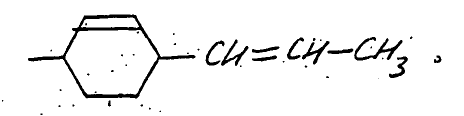

Erfindungsgemäß ist es von Vorteil, wenn der Rest R¹ substituiert ist.

Beispiele geeigneter Substitutienten für den Rest R¹ sind -F, -Cl, -Br, -I, -CN, -NO², -OH, -OR², -SH, -SR², -NH2, -NHR², -N(NR²)2 und/oder -OOC-R², worin die Variable R² die Bedeutung von R¹, ausgenommen das Wasserstoffatom, hat.

Beispiele geeigneter Reste R² dieser Art sind die vorstehend bei den Resten R¹ beschriebenen.

Weitere Beispiele geeigneter Reste R² sind verzweigte C₄- bis C₁₂-Alkylreste, insbesondere 1,1-Dimethyl-ethan-1-yl, -propan-1-yl, -butan-1-yl, -pentan-1-yl, -hexan-1-yl oder -heptan-1-yl, welche erfindungsgemäß von Vorteil sind und deshalb bevorzugt verwendet werden.

Erfindungsgemäß ist es von besonderem Vorteil, wenn der Rest R¹ eine einfach substituierte Methylgruppe ist.

Des weiteren ist es erfindungsgemäß von besonderem Vorteil, wenn der Rest R¹, insbesondere die Methylgruppe, mit -OOC-R² substituiert ist.

Die Herstellung der hydrophoben Polyester (C) weist keine methodischen Besonderheiten auf, sondern erfolgt mit Hilfe der üblichen und bekannten Methoden der Herstellung niedermolekularer und oligomerer Polyester. Beispiele geeigneter Methoden sind die vorstehend bei der Herstellung des Polyesters (A 1) beschriebenen.

Vorteilhafte niedermolekulare hydrophobe Polyester (C) können insbesondere durch die Umsetzung von Hydroxydicarbonsäuren mit Epoxiden hergestellt werden.

Beispiele geeigneter Hydroxydicarbonsäuren sind Tartronsäure, Äpfelsäure oder Weinsäure.

Beispiele geeigneter Epoxide, insbesondere glycidylgruppenhaltiger, sind Ethylenoxid, Propylenoxid, Epichlorhydrin, Glycidol, Glycidylether, insbesondere Aryl- und Alkylglycidylether, oder Glycidylester, insbesondere die Glycidylester von tertiären, stark verzweigten, gesättigten Monocarbonsäuren, welche unter dem Handelsnamen Versatic^{R}-Säuren von der Firma Deutsche Shell Chemie vertrieben werden. Von diesen sind die Versatic^{R}-Säureglycidylester, welche unter dem Handelsnamen Cardura^{R} E10 vertrieben werden, ganz besonders vorteilhaft und werden deshalb ganz besonders bevorzugt verwendet.

Ein Beispiel für einen vorteilhaften niedermolekularen hydrophoben Polyester (C) ist das Umsetzungsprodukt von Äpfelsäure mit Cardura^{R} E10.

Erfindungsgemäß vorteilhafte oligomere hydrophobe Polyester (C) können insbesondere durch die Umsetzung der vorstehend bei den Polyestern (A 1) beschriebenen Diole, Triole oder Tetrole mit den vorstehend bei den Polyestern (A 1) beschriebenen Dicarbonsäuren sowie die Umsetzung der resultierenden Polyester (C) mit den vorstehend beschriebenen Epoxiden hergestellt werden. Zur Herstellung der Polyester (C) werden die Polyole in solchen molaren Verhältnissen miteinander umgesetzt, daß lineare Strukturen resultieren. Der Fachmann kann daher die geeigneten Verhältnisse aufgrund seiner Erfahrung oder anhand einfacher Vorversuche ermitteln. Im Falle der Diole liegt das molare Verhältnis von Hydroxylgruppen zu Carboxylgruppen vorteilhafterweise bei 1,0, im Falle der Triole vorteilhafterweise bei mindestens 1,5, insbesondere mindestens 2,0, und im Falle der Tetrole vorteilhafterweise bei mindestens 2,0. Die Umsetzung kann stufenweise oder in einem Eintopfverfahren durchgeführt werden.

Erfindungsgemäß sind Triole besonders vorteilhaft und werden deshalb besonders bevorzugt verwendet. Ein Beispiel für die besonders vorteilhaften Triole ist Trimethylolpropan, welches ganz besonders bevorzugt verwendet wird.

Erfindungsgemäß sind die aliphatischen und cycloaliphatischen Dicarbonsäuren besonders vorteilhaft und werden deshalb besonders bevorzugt verwendet. Ein Beispiel für die besonders vorteilhaften aliphatischen Dicarbonsäuren ist Adipinsäure; ein Beispiel für die besonders vorteilhaften cycloaliphatischen Dicarbonsäuren ist Hexahydrophthalsäure.

An Stelle der Dicarbonsäuren können, sofern existent, auch deren Anhydride oder ihre zur Umesterung befähigten Derivate wie die Alkylester verwendet werden.

Der Gehalt des erfindungsgemäße Beschichtungsstoffs an Polyester (C) kann breit variieren und richtet sich nach den Erfordernissen des Einzelfalls. Vorzugsweise werden die Polyester (C) in einer Menge von, bezogen auf den Festkörper des erfindungsgemäße Beschichtungsstoff, 1 bis 30 Gew.-% eingesetzt.

Der erfindungsgemäße Beschichtungsstoff kann mindestens eine aromatische Mono- und/oder Polycarbonsäure und/oder mindestens ein Anhydrid einer aromatischen Polycarbonsäure (D) in einer Menge von 1,5 bis 5 Gew.-%, bezogen auf den Festkörper des Beschichtungsstoffs, enthalten. Bevorzugt werden dabei Phthalsäureanhydrid, Benzoesäure und/oder alkyl- und/oder alkoxy-substituierte Benzoesäuren zugesetzt. Besonders bevorzugt wird Benzoesäure (D) verwendet.

Der erfindungsgemäßen Beschichtungsstoff kann außerdem ein oder mehrere organische Lösemittel (E) enthalten. Diese Lösemittel (E) werden üblicherweise in Mengen von 20 bis 70 Gew.-%, bevorzugt von 30 bis 60 Gew.-%, jeweils bezogen auf das Gesamtgewicht des Beschichtungsstoffs, eingesetzt.

Beispiele für geeignete Lösemittel (E) sind die vorstehend beschriebenen.

Der erfindungsgemäße Beschichtungsstoff kann darüber hinaus geeignete lackübliche Zusatzstoffe (F) wie farb- und/oder effektgebende Pigmente, organische und anorganische, transparente oder opake Füllstoffe, Nanopartikel, thermisch härtbare Reaktivverdünner, mit aktinischer Strahlung härtbare Reaktiverdünner, UV-Absorber, Lichtschutzmittel, Radikalfänger, thermolabile radikalische Initiatoren, Photoinitiatoren und -Coinitiatoren, sonstige zusätzliche thermisch und/oder mit aktinischer Strahlung härtbare Bindemittel, zusätzliche Vemetzungsmittel, wie sie in Einkomponentensystemen verwendet werden, Katalysatoren für die thermische Vernetzung, Entlüftungsmittel, Slipadditive, Polymerisationsinhibitoren, Entschäumer, Emulgatoren, Netz- und Dipergiermittel, Haftvermittler, Verlaufmittel, filmbildende Hilfsmittel, Sag control agents (SCA), rheologiesteuernde Additive (Verdicker), Flammschutzmittel, Sikkative, Trockungsmittel, Hautverhinderungsmittel, Korrosionsinhibitoren, Wachse, Mattierungsmittel oder Vorstufen organisch modifizierter Keramikmaterialien enthalten.

Art und Menge der Zusatzstoffe (F) richten sich nach dem Verwendungszweck der mit Hilfe der erfindungsgemäßen Beschichtungsstoffe hergestellten Beschichtungen.

Dient beispielsweise ein erfindungsgemäße Beschichtungsstoff der Herstellung von Unidecklackierungen oder Basislackierungen, enthält er üblicherweise farb- und/oder effektgebende Pigmente (F) sowie gegebenenfalls opake Füllstoffe. Dient ein erfindungsgemäßer Beschichtungsstoff beispielsweise der Herstellung von Klarlackierungen oder Sealer, sind diese Zusatzstoffe (F) naturgemäß in dem betreffenden Beschichtungsstoff nicht enthalten.

Beispiele geeigneter Effektpigmente (F) sind Metallplättchenpigmente wie handelsübliche Aluminiumbronzen, gemäß DE 36 36 183 A 1 chromatierte Aluminiumbronzen, und handelsübliche Edelstahlbronzen sowie nichtmetallische Effektpigmente, wie zum Beispiel Perlglanz-bzw. Interferenzpigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, verwiesen.

Beispiele für geeignete anorganische farbgebende Pigmente (F) sind natürliche Pigmente Titandioxid, Eisenoxide, Sicotransgelb und Ruß. Beispiele für geeignete organische farbgebende Pigmente (F) sind Azomethin-Pigmente, Azopigmente, polycyclische Pigmente, Thioindigopigmente oder Metallkomplex-Pigmente. Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentvolumenkonzentration«, Seite 563 »Thioindigo-Pigmente «, Seite 567 »Titandioxid-Pigmente«, Seiten 400 und 467, »Natürlich vorkommende Pigmente«, Seite 459 »Polycyclische Pigmente«, Seite 52, »Azomethin-Pigmente«, »Azopigmente«, und Seite 379, »Metallkomplex-Pigmente«, verwiesen.

Beispiele geeigneter organischer und anorganischer Füllstoffe (F) sind Kreide, Calciumsulfate, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Holzmehl. Ergänzend wird auf Römpp Lexikon Lacke und Druckfarben, Georg Thieme Verlag, 1998, Seiten 250 ff., »Füllstoffe«, verwiesen.

Beispiele geeigneter thermisch härtbarer Reaktiverdünner (F) sind stellungsisomere Diethyloctandiole oder Hydroxylgruppen enthaltende hyperverzweigte Verbindungen oder Dendrimere, wie sie in den Patentanmeldungen DE 198 09 643 A 1, DE 198 40 605 A 1 oder DE 198 05 421 A 1 beschrieben werden.

Beispiele geeigneter mit aktinischer Strahlung härtbarer Reaktivverdünner (F) sind die in Römpp Lexikon Lacke und Druckfarben, Georg Thieme Verlag, Stuttgart, New York, 1998, auf Seite 491 unter dem Stichwort »Reaktivverdünner« beschriebenen.

Beispiele geeigneter thermolabiler radikalischer Initiatoren (F) sind organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether.

Beispiele geeigneter Katalysatoren (F) für die Vernetzung sind Dibutylzinndilaurat, Lithiumdecanoat, Bismutlactat oder -dimethylpropionat oder Zinkoctoat.

Beispiele geeigneter Photoinitiatoren und Coinitiatoren (F) werden in Römpp Lexikon Lacke und Druckfarben, Georg Thieme Verlag Stuttgart, 1998, Seiten 444 bis 446, beschrieben.

Beispiele geeigneter zusätzlicher Vernetzungsmittel (F) sind solche, die üblicherweise für die thermische Härtung bei Temperaturen oberhalb 90°C angewandt werden, wie
- Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A 1 oder EP-B-0 245 700 A 1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden,
- Carboxylgruppen enthaltende Verbindungen oder Harze, wie sie beispielsweise in der Patentschrift DE 196 52 813 A 1 beschrieben werden,
- Epoxidgruppen enthaltende Verbindungen oder Harze, wie sie beispielsweise in den Patentschriften EP 0 299 420 A 1, DE 22 14 650 B 1, DE 27 49 576 B 1, US 4,091,048 A 1 oder US 3,781,379 A 1 beschrieben werden,
- blockierte Polyisocyanate, wie sie beispielsweise in den Patentschriften US 4,444,954 A 1, DE 196 17 086 A 1, DE 196 31 269 A 1, EP 0 004 571 A 1 oder EP 0 582 051 A 1 beschrieben werden, und/oder
- Tris(alkoxycarbonylamino)-triazine, wie sie in den Patentschriften US 4,939,213 A 1, US 5,084,541 A 1, US 5,288,865 A 1 oder EP 0 604 922 A 1 beschrieben werden.

Beispiele für geeignete Entlüftunsmittel (F) sind Diazadicycloundecan oder Benzoin.

Beispiele geeigneter Emulgatoren (F) sind nicht ionische Emulgatoren, wie alkoxylierte Alkanole, Polyole, Phenole und Alkylphenole oder anionische Emulgatoren wie Alkalisalze oder Ammoniumsalze von Alkancarbonsäuren, Alkansulfonsäuren und Sulfosäuren von alkoxylierten Alkanolen, Polyolen, Phenolen und Alkylphenolen.

Beispiele geeigneter Netzmittel (F) sind Siloxane, fluorhaltige Verbindungen, Carbonsäurehalbester, Phosphorsäureester, Polyacrylsäuren und deren Copolymere oder Polyurethane.

Ein Beispiel für einen geeigneten Haftvermittler (F) ist Tricyclodecandirnethanol.

Beispiele für geeignete filmbildende Hilfsmittel (F) sind Cellulose-Derivate wie Celluloseacetobutyrat (CAB).

Beispiele geeigneter transparenter Füllstoffe (F) sind solche auf der Basis von Siliziumdioxid, Aluminiumoxid oder Zirkoniumoxid; ergänzend wird noch auf das Römpp Lexikon Lacke und Druckfarben, Georg Thieme Verlag, Stuttgart, 1998, Seiten 250 bis 252, verwiesen.

Beispiele geeigneter Sag control agents (SCA) (F) sind Harnstoffe, modifizierte Harnstoffe und/oder Kieselsäuren, wie sie beispielsweise in den Literaturstellen EP 0 192 304 A 1, DE 23 59 923 A 1, DE 18 05 693 A 1, WO 94/22968, DE 27 51 761 C 1, WO 97/12945 oder "farbe + lack", 11/1992, Seiten 829 ff., beschrieben werden.

Beispiel geeigneter rheologiesteuernder. Additive (F) sind die aus den Patentschriften WO 94/22968, EP 0 276 501 A 1, EP 0 249 201 A 1 oder WO 97/12945 bekannten; vernetzte polymere Mikroteilchen, wie sie beispielsweise in der EP 0 008 127 A 1 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate.

Ein Beispiel für ein geeignetes Mattierungsmittel (F) ist Magnesiumstearat.

Beispiele geeigneter Vorstufen (F) für organisch modifizierte Keramikmaterialien sind hydrolysierbare metallorganische Verbindungen insbesondere von Silizium und Aluminium.

Weitere Beispiele für die vorstehend aufgeführten Zusatzstoffe (F) sowie Beispiele geeigneter UV-Absorber; Radikalfänger, Verlaufmittel, Flammschutzmittel, Sikkative, Trocknungsmittel, Hautverhinderungsmittel, Korrosionsinhibitoren und Wachse (F) werden in dem Lehrbuch »Lackadditive« von Johan Bieleman, Wiley-VCH, Weinheim, New York, 1998, im Detail beschrieben.

Besonders vorteilhafte erfindungsgemäße Beschichtungsstoff enthalten, jeweils bezogen auf ihren Festkörper,
- 15 bis 70, bevorzugt 15 bis 45 Gew.-%, der Bindemittelkomponente (A),
- 7 bis 50, bevorzugt 10 bis 45 Gew.-%, der Vernetzungsmittelkomponente (B),
- 1 bis 30, bevorzugt 2 bis 25 Gew.-%, mindestens eines Polyesters (C) und
- 1,5 bis 5, bevorzugt 2 bis 4,5 Gew.-%, mindestens eines Bestandteils (D),
wobei sich die Gewichtsprozentangaben zu 100 Gew.-% addieren.

Sofern diese erfindungsgemäße Beschichtungsstoffe flüssig sind und eine Viskosität aufweisen, die für die Applikation geeignet ist, können sie lösemittelfreie, sogenannten 100%-Systeme sein. Vorzugsweise enthalten aber die erfindungsgemäßen Beschichtungsstoffe mindestens ein organisches Lösemittel (E) bevorzugt in einer Menge von 20 bis 70, insbesondere 30 bis 60 Gew.-%, jeweils bezogen auf die Gesamtmenge des erfindungsgemäßen

Beschichtungsstoffs. Besonders bevorzugt wird das organische Lösemittel (E) in einer Menge angewandt, daß die erfindungsgemäßen Unidecklacke, Basislacke und Klarlacke die gesetzlichen VOC(Volatile Organic Compounds)-Vorschriften erfüllen (d.h. VOC < 420 g/l).

Die Herstellung des erfindungsgemäßen Beschichtungsstoffs weist keine methodischen Besonderheiten auf, sondern erfolgt in üblicher und bekannter Weise durch Vermischen der vorstehend beschriebenen Bestandteile in geeigneten Mischaggregaten wie Rührkessel, Dissolver, Rührwerksmühlen, Homogenisatoren oder Extruder.

Enthält der erfindungsgemäße Beschichtungsstoff auch durch aktinische Strahlung aktivierbare Zusatzstoffe (F), wird vorzugsweise unter Ausschluß von aktinischem Licht gearbeitet, um eine vorzeitige Vernetzung des Beschichtungsstoffs zu verhindern.

Dabei können die Bestandteile in beliebiger Reihenfolge zur Anwendung kommen. Für den erfindungsgemäßen Beschichtungsstoff ist es jedoch von Vorteil, wenn er nach dem erfindungsgemäßen Verfahren hergestellt wird.

Bei dem erfindungsgemäßen Verfahren werden die Bindemittelkomponente (A) und die Vernetzungsmittelkomponente (B) vor der Applikation des erfindungsgemäßen Beschichtungsstoff miteinander vermischt. Dabei werden die vorstehend beschriebenen Bestandteile in Mengen angewandt, daß die vorstehend beschriebenen Mengenverhältnisse bzw. Gehalte an Bestandteilen in dem erfindungsgemäßen Beschichtungsstoff resultieren.

Erfindungsgemäß wird vor der Zugabe der Vernetzungsmittelkomponente (B) die Bindemittelkomponente (A) mit mindestens einem der vorstehend beschriebenen Polyester (C) vermischt. Dies kann mit Hilfe der vorstehend beschriebenen Vorrichtungen bei Raumtemperatur oder bei höheren Temperaturen durchgeführt werden. Dabei ist es erfindungsgemäß desweiteren von Vorteil, wenn die vorstehend beschriebenen aromatischen Carbonsäuren und/oder deren Anhydride (D) in diesem Verfahrensschritt mit eingemischt werden. Im allgemeinen empfiehlt es sich hierbei eine Temperatur von 180°C, vorzugsweise bei 150°C und insbesondere 100°C nicht zu überschreiten, um eine thermische Schädigung der Bestandteile der Bindemittelkomponente (A) zu vermeiden.

Erfindungsgemäß ist es außerdem von besonderem Vorteil, wenn der oder die vorstehend beschriebenen Polyester (C) in der Form eines Mischlacks zugesetzt werden. Hierbei kann die Zusammensetzung der Mischlacke breit variieren. Erfindungsgemäß ist es von ganz besonderem Vorteil, wenn der Mischlack, bezogen auf seine Gesamtmenge, 50 bis 90, bevorzugt 52 bis 85, besonders bevorzugt 54 bis 80, ganz besonders bevorzugt 56 bis 75 und insbesondere 58 bis 70 Gew.-% mindestens eines Polyesters (C) und 10 bis 50, bevorzugt 15 bis 48, besonders bevorzugt 20 bis 46, ganz besonders bevorzugt 25 bis 44 und insbesondere 30 bis 42 Gew.-% mindestens eines der vorstehend beschriebenen organischen Lösemittel (E) und/oder mindestens eines der vorstehend beschriebenen Zusatzstoffe (F) enthält.

Die Bindemittelkomponente (A) und der Mischlack können in beliebigen Mengenverhältnissen miteinander vermischt werden, solange nur die vorstehend beschriebenen vorteilhaften Mengenverhältnisse der Bestandteile des erfindungsgemäßen Beschichtungsstoffs resultieren. Erfindungsgemäß ist es dabei von Vorteil, ein Volumenverhältnis von (A) : Mischlack = (3 - 5) : 1, bevorzugt (3,5 - 4,5) : 1, besonders bevorzugt (3,8 - 4,2) : 1 und insbesondere 4 : 1 anzuwenden.

Des weiteren können das Gemisch aus Bindemittelkomponente (A) und Mischlack einerseits und Vernetzungsmittelkomponente (B) andererseits in beliebigen Mengenverhältnissen miteinander vermischt werden, solange nur die vorstehend beschriebenen vorteilhaften Mengenverhältnisse der Bestandteile des erfindungsgemäßen Beschichtungsstoffs resultieren. Erfindungsgemäß ist es dabei von Vorteil, ein Verhältnis von Mischung : (B) = (3 - 5) : 1, bevorzugt (3,5 - 4,5) : 1, besonders bevorzugt (3,8 - 4,2) : 1 und insbesondere 4 : 1 anzuwenden.

Nicht zuletzt können das hierbei resultierende Gemisch aus Bindemittelkomponente (A) Mischlack und Vernetzungsmittelkomponente (B) einerseits und mindestens einem organischen Lösemittel (E) in beliebigen Mengenverhältnissen miteinander vermischt werden, solange nur die vorstehend beschriebenen vorteilhaften Mengenverhältnisse der Bestandteile des erfindungsgemäßen Beschichtungsstoff resultieren. Erfindungsgemäß ist es dabei von Vorteil, ein Volumenverhältnis von [(A) + Mischlack + (B)] : (E) = (4 - 7) : 1, bevorzugt (4,5 - 6,5) : 1, besonders bevorzugt (4,8 - 6,2) : 1 und insbesondere 5 : 1 anzuwenden.

Die resultierenden applikationsfertigen erfindungsgemäßen Beschichtungsstoffe weisen einen deutlich niedrigeren Gehalt an VOC als die bekannten Beschichtungsstoffe, die bis auf den Gehalt an Polyester (C) von gleicher oder vergleichbarer Zusammensetzung sind, auf. Dabei bleibt das vorteilhafte Eigenschaftsprofil der bekannten Beschichtungsstoffe zumindest in vollem Umfang erhalten, wenn es nicht sogar übertroffen wird.

Die erfindungsgemäßen Beschichtungsstoffe sind daher hervorragend für die Herstellung von einschichtigen oder mehrschichtiger Klarlackierungen oder farb- und/oder effektgebenden Lackierungen geeignet. Deswegen können sie mit Vorteil als Bautenanstrichstoff im Innen- und Außenbereich, für die Automobilserienlackierung, die Automobilreparaturlackierung, die Lackierung von Fenstern, Türen oder Möbeln oder die industrielle Lackierung, inklusive Container Coating, Coil Coating und die Beschichtung oder die Imprägnierung elektrotechnischer Bauteile, verwendet werden.

Als Substrate kommen alle zu lackierenden Oberflächen, die durch eine Härtung der hierauf befindlichen Schichten unter der Anwendung von Hitze oder der kombinierten Anwendung von Hitze und aktinischer Strahlung (Dual Cure) nicht geschädigt werden, in Betracht. Geeignete Substrate bestehen z. B. aus Metallen, Kunststoffen, Holz, Keramik, Stein, Textil, Faserverbunden, Leder, Glas, Glasfasern, Glas- und Steinwolle, mineral- und harzgebundenen Baustoffen, wie Gips- und Zementplatten oder Dachziegel, sowie Verbunden dieser Materialien. Besonders bevorzugte Substrate sind PKW- und Nutzfahrzeugkarosserien und Teile hiervon.

Ganz besondere Vorteile zeigt der erfindungsgemäße Beschichtungsstoff bei der Autoreparaturlackierung und der Lackierung von Nutzfahrzeugen. Die aus dem erfindungsgemäßen Beschichtungsstoff hergestellte erfindungsgemäße Reparaturlackierung zeichnet sich vor allem durch ihre hervorragende Haftung auf der Originallackierung aus. Die aus dem erfindungsgemäßen Beschichtungsstoff hergestellte Unidecklackierung für Nutzfahrzeuge zeichnet sich vor allem durch seine Abklebfestigkeit, seinen Glanz und seine brillianten Farben aus.

Die erfindungsgemäßen Beschichtungsstoffe zeigen indes auch bei der Automobilserienlackierung ganz besondere Vorteile. So können die aus den üblichen und bekannten Wasserbasislacken hergestellten Wasserbasislackschichten ohne Gefahr des Einbrechens mit den erfindungsgemäßen Klarlacken überschichtet werden, wonach die Wasserbasislackschichten und die Klarlackschichten gemeinsam gehärtet werden (Naß-in-naß-Verfahren). Die resultierenden erfindungsgemäßen die farb- und/oder effektgebenden Mehrschichtlackierungen zeichnen sich durch einen sehr gute Verlauf, brillante Farben, hervorragende Metalliceffekte und einen sehr guten Glanz aus.

Die Applikation der erfindungsgemäßen Beschichtungsstoffe kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird. Enthalten die erfindungsgemäßen Beschichtungsstoffe Bestandteile, die mit aktinischer Strahlung aktivierbar sind, wird die Applikation vorzugsweise unter Ausschluß von aktinischer Strahlung, insbesondere Tageslicht, durchgeführt.

Im allgmeinen werden bei der Automobilserienlackierung und - reparaturlackierung sowie der Nutzfahrzeuglackierung die erfindungsgemäßen Lacke in einer Naßschichtdicke appliziert, daß nach ihrer Aushärtung Schichten mit der für ihre Funktionen notwendigen und vorteilhaften Schichtdicken resultieren. Im Falle der Unidecklackierung liegt diese Schichtdicke bei 10 bis 150, vorzugsweise 10 bis 120, besonders bevorzugt 10 bis 100 und insbesondere 10 bis 90 µm, im Falle der Basislackierung liegt sie bei 5 bis 50, vorzugsweise 5 bis 40, besonders bevorzugt 5 bis 30 und insbesondere 10 bis 25 µm, und im Falle der Klarlackierung liegt sie bei 10 bis 100, vorzugsweise 15 bis 80, besonders bevorzugt 20 bis 70 und insbesondere 25 bis 60 µm. Es kann aber auch der aus der europäischen Patentanmeldung EP 0 817 614 A 1 bekannte Mehrschichtaufbau aus einer Elektrotauchlackierung, einer ersten Basislackierung, einer zweiten Basislackierung und einer Klarlackierung angewandt werden, worin die Gesamtschichtdicke der ersten und zweiten Basislackierung bei 15 bis 40 µm liegt und die Schichtdicke der ersten Basislackierung 20 bis 50% der besagten Gesamtschichtdicke beträgt.

Die applizierte erfindungsgemäße Lackschicht wird thermisch oder thermisch und mit aktinischer Strahlung (Dual Cure) gehärtet.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen.

Vorzugsweise wird die thermische Vernetzung bei Temperaturen unterhalb 100°C durchgeführt. Im allgemeinen empfiehlt es sich, Temperaturen von 90°C, vorzugsweise 80°C und insbesondere 70°C nicht zu überschreiten. Bevorzugt wird die thermische Vernetzung bei Raumtemperatur durchgeführt.

Vorzugsweise wird die Härtung mit aktinischer Strahlung mit UV-Strahlung und/oder Elektronenstrahlen durchgeführt. Vorzugsweise wird hierbei eine Dosis von 1.000 bis 3.000, bevorzugt 1.100 bis 2.900, besonders bevorzugt 1.200 bis 2.800, ganz besonders bevorzugt 1.300 bis 2.700 und insbesondere 1.400 bis 2.600 mJ/cm² angewandt. Gegebenenfalls kann diese Härtung mit aktinischer Strahlung von anderen Strahlenquellen ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der Lackschichten gewährleistet werden. Auch im Falle der Härtung mit UV-Strahlung kann, um die Bildung von Ozon zu vermeiden, unter Inertgas gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Blitzlampen der Firma VISIT, Quecksilberhoch- oder - niederdruckdampflampen, welche gegebenenfalls mit Blei dotiert sind, um ein Strahlenfenster bis zu 405 nm zu öffnen, oder Elektronenstrahlquellen. Deren Anordnung ist im Prinzip bekannt und kann den Gegebenheiten des Werkstücks und der Verfahrensparameter angepaßt werden. Bei kompliziert geformten Werkstücken, wie sie für Automobilkarosserien vorgesehen sind, können die nicht direkter Strahlung zugänglichen Bereiche (Schattenbereiche) wie Hohlräume, Falzen und anderen konstruktionsbedingte Hinterschneidungen mit Punkt-, Kleinflächen- oder Rundumstrahlern verbunden mit einer automatischen Bewegungseinrichtung für das Bestrahlen von Hohlräumen oder Kanten (partiell) ausgehärtet werden.

Die Anlagen und Bedingungen dieser Härtungsmethoden werden beispielsweise in R. Holmes, U.V. and E.B. Curing Formulations for Printing Inks, Coatings and Paints, SITA Technology, Academic Press, London, United Kindom 1984, beschrieben.

Hierbei kann die Aushärtung stufenweise erfolgen, d. h. durch mehrfache Belichtung oder Bestrahlung mit aktinischer Strahlung. Dies kann auch alternierend erfolgen, d. h., daß abwechselnd mit UV-Strahlung und Elektronenstrahlung gehärtet wird.

Werden die thermische Härtung und Härtung mit aktinischer Strahlung zusammen angewandt, können diese Methoden gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden. Besondere Vorteile resultieren, wenn die Lackschichten in zwei getrennten Verfahrensschritten zuerst mit aktinischer Strahlung und anschließend thermisch gehärtet wird.

Auch bei der Applikation und der Härtung weisen die erfindungsgemäßen Beschichtungsstoffe bei signifikant geringeren VOC dasselbe hervorragende Eigenschaftsprofil auf wie die bekannten Beschichtungsstoffe, die bei ansonsten gleicher oder vergleichbarer stoftlicher Zusammensetzung keine Polyester (C) enthalten.

### Beispiele

### Herstellbeispiel 1

### Die Herstellung eines hydroxylgruppenhaltigen Polyesters (A 1)

In einem 4-Liter-Polykondensationskessel mit Rührer, dampfbeheizter Kolonne und Wasserabscheider wurden 796 Gewichtsteile Trimethylolpropan, 540 Gewichtsteile Isononansäure, 821 Gewichtsteile Phthalsäureanhydrid und 83 Gewichtsteile Xylol gegeben und langsam aufgeheizt. Es wurde bei einer Temperatur von max. 190°C bis zu einer Säurezahl von 5 mgKOH/g und einer Viskosität von 8,0 dPas (60 %ig in Xylol) kondensiert. Anschließend wurde gekühlt und bei 130°C mit 910 Gewichtsteilen Shellsol® A angelöst sowie weiter auf Raumtemperatur gekühlt.

Der so erhaltene Polyester hatte einen Festkörper von 66,5 %, eine Säurezahl von 5 mg KOH/g, eine OH-Zahl von 97 mg KOH/g und eine Viskosität von 70 dPas (original).

### Herstellbeispiel 2

### Die Herstellung eines (Meth)Acrylatcopolymerisats (A 2)

In einem 4 Liter fassenden Edelstahlreaktor, ausgerüstet mit Rührer, Rückflußkühler, einem Initiatorzulauf und einem Monomerzulauf wurden 700 Gewichtsteile des Polyesters (A 1) des Herstellbeispiels 1 und 70 Gewichtsteile VEOVA® 10 (Vinylester der Versatic®-Säure) vorgelegt und auf 165°C aufgeheizt. Zur Vorlage wurde unter Rühren während vier Stunden gleichmäßig eine Monomermischung aus 350 Gewichtsteilen Styrol, 155 Gewichtsteilen Butandiolmonoacrylat und 125 Gewichtsteilen Methylmethacrylat und während fünf Stunden gleichmäßig eine Initiatorlösung aus 14 Gewichtsteilen Di-tert.-butylperoxid, 44 Gewichtsteilen Shellsol®A und 25 Gewichtsteilen Xylol zudosiert. Mit dem Start bei der Zuläufe wurde gleichzeitig begonnen. Nach der Zugabe wurde das Reaktionsgemisch noch während zwei Stunden nachpolymerisiert. Anschließend wurde die Temperatur auf 120°C gesenkt, und das resultierende (Meth)Acrylatcopolymerisat (A 2) wurde mit Butylacetat auf einen Festkörpergehalt von 65 Gew.-% angelöst und mit 5 Gewichtsteilen Benzoesäure versetzt.

Das (Meth)Acrylatcopolymerisat (A 2) hatte einen Festkörpergehalt von 65 Gew.-%, eine Säurezahl von 5,3 mg KOH/g, eine Viskosität von 2,3 dPas (55%ig in Butylacetat) und eine Hydroxylzahl von 90 mg KOH/g.

### Herstellbeispiel 3

### Die Herstellung eines erfindungsgemäß zu verwendenden Polyesters (C)

In einem Stahlreaktor wurden 284,4 Gewichtsteile Hexahydrophthalsäureranhydrid und 98,3 Gewichtsteile Trimethylolpropan eingewogen und auf 150°C erhitzt. Anschließend wurden hierzu während einer Stunde gleichmäßig 458,5 Gewichtsteile Versaticsäure®-glycidylester (Cardura® E 10) zudosiert. Die Reaktionsmischung wurde so lange bei 150°C gehalten, bis eine Säurezahl 4 mg KOH/g erreicht war. Der resultierende Polyester wurde bei 110°C mit Butylacetat auf ein Feststoffgehalt von 81 Gew.% eingestellt. Die Viskosität der Anlösung lag bei 40 dPas.

### Herstellbeispiel 4

### Die Herstellung eines erfindungsgemäß zu verwendenden Mischlacks

Der erfindungsgemäß zu verwendenden Mischlack wurde aus 82,7 Gewichtsteilen des Polyester (C) des Herstellbeispiels 3, 3 Gewichtsteilen einer 2%igen Lösung von Dibutylzinndilaurat, 2,3 Gewichtsteilen eines handelsüblichen Lichtschutzmittels (HALS der Firma Ciba Specialty Chemicals), 0,7 Gewichtsteilen eines handelsüblichen Verlaufmittels (polyethermodifiziertes Polydimethylsiloxan der Firma Byk), 5 Gewichtsteilen eines weiteren handelsüblichen Verlaufmittels (Acrylatcopolymerisat der Firma Byk) und 6 Gewichtsteilen organischer Lösemittel (Mischung aus Butylacetat und Methylisobutylketon) hergestellt.

### Herstellbeispiel 5

### Die Herstellung einer erfindungsgemäß zu verwendenden Vernetzungsmittelkomponente (B)

Die Vernetzungsmittelkomponente (B) wurde aus den folgenden Bestandteilen hergestellt:

| | |
|---|---|
| 88,6 | Gewichtsteile Desmodur® N 3600¹⁾ |
| 5,7 | Gewichtsteile Butylacetat 98/100 und |
| 5,7 | Gewichtsteile Methylisobutylketon. |

| | |
|---|---|
| ¹⁾ Handelsübliches Polyisocyanat der Firma Bayer AG, 100%ig; | |

### Herstellbeispiel 6

### Die Herstellung eines Lösemittelgemischs (E) zur Einstellung der Viskosität für die Applikation

Das Lösemittelgemisch (E) wurde aus den folgenden Lösemitteln hergestellt:

| | |
|---|---|
| Xylol | 15,0 Gewichtsteile |
| Solventnaphta® | 13,0 Gewichtsteile |
| Benzin 135/180 | 10,0 Gewichtsteile |
| Butylgykolacetat | 3,0 Gewichtsteile |
| n-Butylacetat 98/100 | 50,0 Gewichtsteile |
| 1-Methoxypropylacetat-2 | 5,0 Gewichtsteile |
| Butoxyl | 2,0 Gewichtsteile |
| Dipentene | 2,0 Gewichtsteile |

### Beispiel

### Die Herstellung eines erfindungsgemäßen Klarlacks und einer erfindungsgemäßen Klarlackierung für die Automobilserienlackierung oder - reparaturlackierung

Für die Herstellung des erfindungsgemäßen Klarlacks wurden das (Meth)Acrylatcopolymerisat (A 2) des Herstellbeispiels 2 und der Mischlack gemäß Herstellbeispiel 4 in einem Volumenverhältnis von (A 2) : Mischlack = 4 : 1 miteinander vermischt.

Die resultierende Mischung wurde wiederum mit der Vernetzungsmittelkomponente (B) gemäß Herstellbeispiel 5 und dem Lösemittelgemisch (E) gemäß Herstellbeispiel 6 in einem Volumenverhältnis von Mischung : (B) : (E) = 4 : 1 : 1 vermischt, wodurch der applikationsfertige erfindungsgemäße Klarlack resultierte. Er wies einen VOC von unter 420 g/l auf, der somit unter dem gesetztlich vorgeschriebenen Grenzwert lag.

Der Klarlack wurde in 2 Spritzgängen mit einer Zwischenablüftzeit von 15 min auf Stahlbleche appliziert, die mit einer Füllerlackierung, hergestellt aus einem handelsüblichen konventionellen Füller (Handelsprodukt Glasurit Grundfüller 283-1874 der Firma Glasurit GmbH, Münster) auf Basis eines epoxidgruppenhaltigen Bindemittels und eines aminofunktionellen Härters, und mit einer schwarzen Basislackierung, hergestellt aus einem handelsüblichen schwarzen Basislack der Firma BASF Coatings AG, beschichtet worden waren.

Danach wurde die Klarlackschicht während 16 h bei 20°C getrocknet. Die Trockenfilmschichtdicke betrug 50 bis 60 µm.

Die erfindungsgemäße Klarlackierung wies einen hervorragenden Verlauf auf und war frei von Oberflächenstörungen. Sie wies eine hervorragende Haftung zur Basislackierung auf, die auch nach der Belastung im Schwitzwasserkonstantklima im wesentlichen erhalten blieb. Sie war kratzfest, witterungsstabil und chemikalienstabil. Außerdem war sie abklebefest i. S. der in den Beispielen 1 bis 6 der internationalen Patentanmeldung WO 96/26969 beschriebenen Abklebetests.

## Patentansprüche

1. Thermisch oder thermisch und mit aktinischer Strahlung härtbarer, nichtwäßriger Beschichtungsstoff, enthaltend
(A) eine hydroxygruppenhaltige Bindemittelkomponente, enthaltend
(A 1) mindestens einen hydroxygruppenhaltigen Polyester und
(A 2) mindestens ein hydroxygruppenhaltiges (Meth)Acrylatcopolymerisat, das zumindest teilweise in der Gegenwart des Polyesters (A 1) hergestellt worden ist,
(B) mindestens eine Vernetzungsmittelkomponente, enthaltend mindestens ein Polyisocyanat, und
(C) mindestens einen niedermolekularen und/oder oligomeren, im wesentlichen unverzweigten, hydrophoben Polyester mit mindestens zwei Hydroxylgruppen im Molekül, einer OH-Zahl von 56 bis 500 mg KOH/g, einer Säurezahl <10 mg KOH/g und einem zahlenmittleren Molekulargewicht Mn von 300 bis 2.000 Dalton, wobei der Polyester (C) die allgemeine Formel I aufweist
**[R**^{**1**}**-CH(OH)-CH**_{**2**}**-OOC-]**_{**2**}**R** (I),
worin die Variablen die folgende Bedeutung haben:
R = substituierter oder unsubstituierter zweiwertiger C₁- bis C₂₀-Alkandiyl-, C₂- bis C₂₀-Alkendiyl-, C₄- bis C₂₀-Cycloalkandiyl- oder -Cycloalkendiyl-, C₆- bis C₁₂-Aryliden- oder zweiwertiger C₆- bis C₂₀-Arylalkyl-, -Arylalkenyl-, -Arylcycloalkyl-, oder -Arylcycloalkenylrest; oder
substituierter oder unsubstituierter zweiwertiger aliphatischer, cycloaliphatischer, acyclischer oder cyclischer olefinisch ungesättigter, aromatischer, aliphatisch-aromatischer, cycloaliphatisch-aromatischer, acyclisch-ungesättigt-aromatischer oder cyclisch-ungesättigt-aromatischer Rest, welcher mindestens eine Carbonsäureestergruppe enthält;
R¹ = Wasserstoffatom oder einwertiger substituierter oder unsubstituierter C₁- bis C₂₀-Alkyl-, C₂- bis C₂₀-Alkenyl-, C₄-bis C₁₂-Cycloalkyl- oder -Cycloalkenyl-, C₆- bis C₁₂-Aryl- oder C₆- bis C₂₀-Arylalkyl-, -Arylalkenyl-, -Arylcycloalkyl-, -Arylcycloalkenyl-, -Alkylaryl-, -Alkenylaryl-, -Cycloalkylaryl-, -Cycloalkenylaryl-, -Alkylcycloalkyl-, -Alkylcycloalkenyl-, -Alkenylcycloalkyl-, -Alkenylcycloalkenyl-, -Cycloalkylalkyl-, -Cycloalkenylalkyl-, -Cycloalkylalkenyl- oder -Cycloalkenylalkenylrest.

2. Beschichtungsstoff nach Anspruch 1, **dadurch gekennzeichnet, daß** die Bindemittelkomponente, bezogen auf ihre Gesamtmenge, 20 bis 60 Gew.-% der Polyester (A 1) und 40 bis 80 Gew.-% der (Meth)Acrylatcopolymerisate (A 2) enthält.

3. Beschichtungsstoff nach Anspruch 1 oder 2, **dadurch gekennzeichnet, daß** der Beschichtungsstoff mindestens eine aromatische Mono- und/oder Polycarbonsäure und/oder mindestens ein Anhydrid einer aromatischen Polycarbonsäure (D) enthält.

4. Der Beschichtungsstoff nach Anspruch 1, **dadurch gekennzeichnet, daß** der Rest R mindestens eine Hydroxylgruppe enthält.

5. Der Beschichtungsstoff nach Anspruch 1 oder 4, **dadurch gekennzeichnet, daß** der Rest R¹ substituiert ist, insbesondere mit mindestens einem der folgenden Substituenten: -F, -Cl, -Br, -I, -CN, -NO₂, -OH, -OR², -SH, -SR², -NH2, -NHR², -N(NR²)2 und/oder -OOC-R², worin die Variable R² die Bedeutung der Variablen R¹, ausgenommen das Wasserstoffatom, hat.

6. Beschichtungsstoff nach einem der Ansprüche 1 bis 5, **dadurch gekennzeichnet, daß** es sich bei dem Rest R¹ um eine einfach substitierte Methylgruppe handelt, insbesondere um eine Methylgruppe, welche mit -OOC-R², worin der Rest R² insbesondere einen verzweigten C₄- bis -C₁₂-Alkylrest bezeichnet, einfach substituiert ist.

7. Beschichtungsstoff nach einem der Ansprüche 1 bis 6, **dadurch gekennzeichnet, daß** der Polyester (C) hierin in einer Menge von 1 bis 30 Gew.-%, bezogen auf den Festkörper des Beschichtungsstoff, enthalten ist.

8. Beschichtungsstoff nach einem der Ansprüche 1 bis 7, **dadurch gekennzeichnet, daß** er, bezogen auf seinen Festkörper,
- 15 bis 70 Gew.-% der Bindemittelkomponente (A),
- 7 bis 50 Gew.-% der Vernetzungsmittelkomponente (B),
- 1 bis 30 Gew.-% mindestens eines Polyesters (C) und
- 1,5 bis 5 Gew.-% mindestens eines Bestandteils (D)
enthält, wobei sich die Gewichtsprozentangaben zu 100 Gew.-% addieren.

9. Beschichtungsstoff nach einem der Ansprüche 1 bis 8, **dadurch gekennzeichnet, daß** er, bezogen auf seine Gesamtmenge, 20 bis 70 Gew.-% mindestens eines organischen Lösemittels (E) enthält.

10. Verfahren zur Herstellung des Beschichtungsstoffs gemäß einem der Ansprüche 1 bis 9, bei dem man vor der Applikation die Bindemittelkomponente (A) und die Vernetzungsmittelkomponente (B) miteinander vermischt, **dadurch gekennzeichnet, daß** man der Bindemittelkomponente (A) vor dem Vermischen mindestens einen niedermolekularen und/oder oligomeren, im wesentlichen unverzweigten, hydrophoben Polyester mit mindestens zwei Hydroxylgruppen im Molekül, einer OH-Zahl von 56 bis 500 mg KOH/g, einer Säurezahl <10 mg KOH/g und einem zahlenmittleren Molekulargewicht Mn von 300 bis 2.000 Dalton zusetzt.

11. Verfahren nach Anspruch 10, **dadurch gekennzeichnet, daß** der Polyester (C) die allgemeine Formel I aufweist
**[R**^{**1**}**-CH(OH)-CH**_{**2**}**-OOC-]**_{**2**}**R** (I),
worin die Variablen die folgende Bedeutung haben:
R = substituierter oder unsubstituierter zweiwertiger C₁- bis C₂₀-Alkandiyl-, C₂- bis C₂₀-Alkendiyl-, C₄- bis C₂₀-Cycloalkandiyl- oder -Cycloalkendiyl-, C₆- bis C₁₂-Aryliden- oder zweiwertiger C₆- bis C₂₀-Arylalkyl-, -Arylalkenyl-, -Arylcycloalkyl-, oder -Arylcycloalkenylrest; oder
substituierter oder unsubstituierter zweiwertiger aliphatischer, cycloaliphatischer, acyclischer oder cyclischer olefinisch ungesättigter, aromatischer, aliphatisch-aromatischer, cycloaliphatisch-aromatischer, acyclisch-ungesättigt-aromatischer oder cyclisch-ungesättigt-aromatischer Rest, welcher mindestens eine Carbonsäureestergruppe enthält;
R¹ = Wasserstoffatom oder einwertiger substituierter oder unsubstituierter C₁- bis C₂₀-Alkyl-, C₂- bis C₂₀-Alkenyl-, C₄-bis C₁₂-Cycloalkyl- oder -Cycloalkenyl-, C₆- bis C₁₂-Aryl- oder C₆- bis C₂₀-Arylalkyl-, -Arylalkenyl-, -Arylcycloalkyl-, -Arylcycloalkenyl-, - Alkylaryl-, -Alkenylaryl-, -Cycloalkylaryl-, -Cycloalkenylaryl-,
-Alkylcycloalkyl-, -Alkylcycloalkenyl-, -Alkenylcycloalkyl-, -Alkenylcycloalkenyl-, -Cycloalkylalkyl-, -Cycloalkenylalkyl-, -Cycloalkylalkenyl- oder -Cycloalkenylalkenyrest.

12. Verfahren nach Anspruch 11, **dadurch gekennzeichnet, daß** der Rest R mindestens eine Hydroxylgruppe enthält.

13. Verfahren nach Anspruch 11 oder 12, **dadurch gekennzeichnet, daß** der Rest R¹ substituiert ist, insbesondere mit mindestens einem der folgenden Substituenten: -F, -Cl, -Br, -I, -CN, -NO₂, -OH, -OR², -SH, -SR², -NH2, -NHR², -N(NR²)2 und/oder -OOC-R², worin die Variable R² die Bedeutung der Variablen R¹, ausgenommen das Wasserstoffatom, hat.

14. Verfahren nach einem der Ansprüche 11 bis 13, **dadurch gekennzeichnet, daß** es sich bei dem Rest R¹ um eine einfach substitierte Methylgruppe handelt, insbesondere um eine Methylgruppe, welche mit -OOC-R², worin der Rest R² insbesondere einen verzweigten C₄- bis -C₁₂-Alkylrest bezeichnet; einfach substituiert ist.

15. Verfahren nach einem der Ansprüche 10 bis 14, **dadurch gekennzeichnet, daß** der Polyester (C) in der Form eines Mischlacks zugesetzt wird, der, bezogen auf den Mischlack, 50 bis 90 Gew.-% mindestens eines Polyesters (C) und 10 bis 50 Gew.-% mindestens eines organischen Lösemittels (E) und/oder eines lacküblichen Zusatzstoffs (F) enthält.

16. Verfahren nach Anspruch 15, **dadurch gekennzeichnet, daß** man die Bindemittelkomponente (A) und den Mischlack im Volumenverhältnis von (A) : Mischlack = (3 - 5) : 1 miteinander vermischt.

17. Verfahren nach Anspruch 16, **dadurch gekennzeichnet, daß** man die Mischung aus Bindemittelkomponente (A) und Mischlack und die Vernetzungsmittelkomponente (B) im Volumenverhältnis von Mischung : (B) = (3 - 5) : 1 miteinander vermischt.

18. Verfahren nach Anspruch 16, **dadurch gekennzeichnet, daß** man die Mischung aus Bindemittelkomponente (A), Mischlack und Vernetzungsmittekomponente (B) mit mindestens einem organischen Lösemittel (E) im Volumenverhältnis von [(A) +Mischlack + (B)] : (E) und = (4 - 7) : 1 vermischt.

19. Verwendung des Beschichtungsstoff gemäß einem der Ansprüche 1 bis 9 und/oder des nach dem Verfahren gemäß einem der Ansprüche 10 bis 18 hergestellten Beschichtungsstoffs für die Herstellung von einschichtigen oder mehrschichtigen Klarlackierungen und/oder farb- und/oder effektgebenden Lackierungen.

20. Verwendung nach Anspruch 19, **dadurch gekennzeichnet, daß** der Beschichtungsstoff als Bautenanstrichstoff im Innen- und Außenbereich, für die Automobilserienlackierung, die Automobilreparaturlackierung, die Nutzfahrzeuglackierung, die Lackierung von Fenstern, Türen oder Möbeln oder die industrielle Lackierung, inklusive Container Coating, Coil Coating und die Beschichtung oder die Imprägnierung elektrotechnischer Bauteile, verwendet wird.

## Claims

1. Nonaqueous coating material curable thermally or thermally and with actinic radiation, comprising
(A) a hydroxyl-containing binder component comprising
(A1) at least one hydroxyl-containing polyester and
(A2) at least one hydroxyl-containing (meth)acrylate copolymer prepared at least partly in the presence of the polyester (A1),
(B) at least one crosslinking component comprising at least one polyisocyanate, and
(C) at least one low molecular mass and/or oligomeric, essentially unbranched, hydrophobic polyester having at least two hydroxyl groups in the molecule, an OH number of from 56 to 500 mg KOH/g, an acid number <10 mg KOH/g, and a number-average molecular weight Mn of from 300 to 2000 daltons, the polyester (C) having the general formula I
[**R**^{**1**}**-CH(OH)-CH**_{**2**}**-OOC-]**_{**2**}**R** (I)
where
R = substituted or unsubstituted divalent C₁ to C₂₀ alkanediyl, C₂ to C₂₀ alkenediyl, C₄ to C₂₀ cycloalkanediyl or cycloalkenediyl, C₆ to C₁₂ arylidene or divalent C₆ to C₂₀ arylalkyl, arylalkenyl, arylcycloalkyl or arylcycloalkenyl radical; or
substituted or unsubstituted divalent aliphatic, cycloaliphatic, acyclic or cyclic olefinically unsaturated, aromatic, aliphatic-aromatic, cycloaliphatic-aromatic, acyclic unsaturated aromatic or cyclic unsaturated aromatic radical containing at least one carboxylic ester group;
R¹ = hydrogen atom or monovalent substituted or unsubstituted C₁ to C₂₀ alkyl, C₂ to C₂₀ alkenyl, C₄ to C₁₂ cycloalkyl or cycloalkenyl, C₆ to C₁₂ aryl or C₆ to C₂₀ arylalkyl, arylalkenyl, arylcycloalkyl, arylcycloalkenyl, alkylaryl, alkenylaryl, cycloalkylaryl, cycloalkenylaryl, alkylcycloalkyl, alkylcycloalkenyl, alkenylcycloalkyl, alkenylcycloalkenyl, cycloalkylalkyl, cycloalkenylalkyl, cycloalkylalkenyl or cycloalkenylalkenyl radical.

2. Coating material according to Claim 1, **characterized in that** the binder component, based on its overall amount, contains from 20 to 60% by weight of the polyesters (A1) and from 40 to 80% by weight of the (meth)acrylate copolymers (A2).

3. Coating material according to Claim 1 or 2, **characterized in that** it comprises at least one aromatic mono- and/or polycarboxylic acid and/or at least one anhydride of an aromatic polycarboxylic acid (D).

4. Coating material according to Claim 1, **characterized in that** the radical R contains at least one hydroxyl group.

5. Coating material according to Claim 1 or 4, **characterized in that** the radical R¹ is substituted, in particular by at least one of the following substituents: -F, -Cl, -Br, -I, -CN, -NO₂, -OH, -OR², -SH, -SR², -NH₂, -NHR², -N(NR²)₂ and/or -OOC-R², where R² is as defined for R¹ with the exception of the hydrogen atom.

6. Coating material according to any of Claims 1 to 5, **characterized in that** the radical R¹ is a monosubstituted methyl group, especially a methyl group monosubstituted by -OOC-R² where the radical R² denotes in particular a branched C₄ to C₁₂ alkyl radical.

7. Coating material according to any of Claims 1 to 6, **characterized in that** the polyester (C) is present in an amount of from 1 to 30% by weight, based on the solids of the coating material.

8. Coating material according to any of Claims 1 to 7, **characterized in that** it comprises, based on its solids,
- from 15 to 70% by weight of the binder component (A),
- from 7 to 50% by weight of the crosslinking component (B),
- from 1 to 30% by weight of at least one polyester (C), and
- from 1.5 to 5% by weight of at least one constituent (D),
the percentages by weight adding up to 100% by weight.

9. Coating material according to any of Claims 1 to 8, **characterized in that** it comprises, based on its overall amount from 20 to 70% by weight of at least one organic solvent (E).

10. Process for preparing the coating material according to any of Claims 1 to 9, in which the binder component (A) and the crosslinking component (B) are mixed with one another prior to application, **characterized in that** at least one low molecular mass and/or oligomeric, essentially unbranched, hydrophobic polyester containing at least two hydroxyl groups in the molecule and having an OH number of from 56 to 500 mg KOH/g, an acid number <10 mg KOH/g and a number-average molecular weight Mn of from 300 to 2000 daltons is added to the binder component (A), prior to mixing.

11. Process according to Claim 10, **characterized in that** the polyester (C) has the general formula I
**[R**^{**1**}**-CH(OH)-CH**_{**2**}**-OOC-]**_{**2**}**R** (I)
where
R = substituted or unsubstituted divalent C₁ to C₂₀ alkanediyl, C₂ to C₂₀ alkenediyl, C₄ to C₂₀ cycloalkanediyl or cycloalkenediyl, C₆ to C₁₂ arylidene or divalent C₆ to C₂₀ aralalkyl, arylalkenyl, arylcycloalkyl or arylcycloalkenyl radical; or
substituted or unsubstituted divalent aliphatic, cycloaliphatic, acyclic or cyclic olefinically unsaturated, aromatic, aliphatic-aromatic, cycloaliphatic-aromatic, acyclic unsaturated aromatic or cyclic unsaturated aromatic radical containing at least one carboxylic ester group;
R¹ = hydrogen atom or monovalent substituted or unsubstituted C₁ to C₂₀ alkyl, C₂ to C₂₀ alkenyl, C₄ to C₁₂ cycloalkyl or cycloalkenyl, C₆ to C₁₂ aryl or C₆ to C₂₀ arylalkyl, arylalkenyl, arylcycloalkyl, arylcycloalkenyl, alkylaryl, alkenylaryl, cycloalkylaryl, cycloalkenylaryl, alkylcycloalkyl, alkylcycloalkenyl, alkenylcycloalkyl, alkenylcycloalkenyl, cycloalkylalkyl, cycloalkenylalkyl, cycloalkylalkenyl or cycloalkenylalkenyl radical.

12. Process according to Claim 11, **characterized in that** the radical R contains at least one hydroxyl group.

13. Process according to Claim 11 or 12, **characterized in that** the radical R¹ is substituted, in particular by at least one of the following substituents: -F, -Cl, -Br, -I, -CN, -NO₂, -OH, -OR², -SH, -SR², -NH₂, -NHR², -N(NR²)₂ and/or -OOC-R², where R² is as defined for R¹ with the exception of the hydrogen atom.

14. Process according to any of Claims 11 to 13, **characterized in that** the radical R¹ is a monosubstituted methyl group, especially a methyl group monosubstituted by -OOC-R² where the radical R² denotes in particular a branched C₄ to C₁₂ alkyl radical.

15. Process according to any of Claims 10 to 14, **characterized in that** the polyester (C) is added in the form of a mixing varnish containing, based on the mixing varnish, from 50 to 90% by weight of at least one polyester (C) and from 10 to 50% by weight of at least one organic solvent (E) and/or of a customary coatings additive (F).

16. Process according to Claim 15, **characterized in that** the binder component (A) and the mixing varnish are mixed with one another in a volume ratio of (A) to mixing varnish of (3-5):1.

17. Process according to Claim 16, **characterized in that** the mixture of binder component (A) and mixing varnish and the crosslinking component (B) are mixed with one another in a volume ratio of mixture to (B) of (3-5):1.

18. Process according to Claim 16, **characterized in that** the mixture of binder component (A), mixing varnish and crosslinking component (B) with at least one organic solvent (E) is mixed together in a volume ratio of [(A) + mixing varnish + (B)] to (E) of (4-7):1.

19. Use of the coating material according to any of Claims 1 to 9 and/or of the coating material prepared by the process according to any of Claims 10 to 18 to produce single-coat or multicoat clearcoats and/or colour and/or effect coating systems.

20. Use according to Claim 19, **characterized in that** the coating material is used as an interior and exterior architectural coating, for automotive OEM finishing, automotive refinishing, the coating of commercial vehicles, the coating of windows, doors or furniture or industrial coating, including container coating, coil coating and the coating or impregnation of electrical components.

## Revendications

1. Matière non aqueuse de revêtement, durcissable thermiquement ou thermiquement et par un rayonnement actinique, contenant
(A) un composant liant contenant des groupes hydroxy, qui contient
(A1) au moins un polyester contenant des groupes hydroxy et
(A2) au moins un copolymère de (méth)acrylate contenant des groupes hydroxy, qui a été préparé au moins en partie en présence du polyester (A1),
(B) au moins un composant agent de réticulation, contenant au moins un polyisocyanate, et
(C) au moins un polyester hydrophobe de faible masse moléculaire et/ou oligomère, essentiellement non ramifié, comportant au moins deux groupes hydroxy dans la molécule, ayant un indice de groupes OH de 56 à 500 mg de KOH/g, un indice d'acide < 10 mg de KOH/g et ayant une masse moléculaire moyenne en nombre Mn de 300 à 2 000 daltons, le polyester (C) présentant la formule générale I
**[R**^{**1**}**-CH(OH)-CH**_{**2**}**-OOC-]**_{**2**}**R** (I)
dans laquelle les variables ont les significations suivantes :
R représente un radical alcanediyle en C₁-C₂₀, alcènediyle en C₂-C₂₀, cycloalcanediyle ou cycloalcènediyle en C₄-C₂₀, arylidène en C₆-C₁₂ ou arylalkyle, arylalcényle, arylcycloalkyle ou arylcycloalcényle divalent en C₆-C₂₀, substitué ou non-substitué ; ou
un radical aliphatique, cycloaliphatique, acyclique ou cyclique à insaturation oléfinique, aromatique, aliphatique-aromatique, cycloaliphatique-aromatique, acyclique insaturé-aromatique ou cyclique-insaturé-aromatique, divalent, substitué ou non substitué, qui comporte au moins un groupe ester d'acide carboxylique ;
R¹ représente un atome d'hydrogène ou un radical alkyle en C₁-C₂₀, alcényle en C₂-C₂₀, cycloalkyle ou cycloalcényle en C₄-C₁₂, aryle en C₆-C₁₂ ou arylalkyle, arylalcényle, arylcycloalkyle, arylcycloalcényle, alkylaryle, alcénylaryle, cycloalkylaryle, cycloalcénylaryle, alkylcycloalkyle, alkylcycloalcényle, alcénylcycloalkyle, alcénylcycloalcényle, cycloalkylalkyle, cycloalcénylalkyle, cycloalkylalcényle ou cycloalcénylalcényle en C₆-C₂₀, monovalent, substitué ou non substitué.

2. Matière de revêtement selon la revendication 1, **caractérisée en ce que** le composant liant contient, par rapport à sa quantité totale, 20 à 60 % en poids du polyester (A1) et 40 à 80 % en poids du copolymère de (méth)acrylate (A2).

3. Matière de revêtement selon la revendication 1 ou 2, **caractérisée en ce que** la matière de revêtement contient au moins un acide mono- et/ou polycarboxylique aromatique et/ou au moins un anhydride d'un acide polycarboxylique aromatique (D).

4. Matière de revêtement selon la revendication 1, **caractérisée en ce que** le radical R contient au moins un groupe hydroxy.

5. Matière de revêtement selon la revendication 1 ou 4, **caractérisée en ce que** le radical R¹ est substitué, en particulier par au moins l'un des substituants suivants : -F, -Cl, -Br, -I, -CN, -NO₂, -OH, -OR², -SH, -SR², -NH₂, -NHR², -N(NR²)₂ et/ou -OOC-R², la variable R² ayant la signification de la variable R¹, à l'exception de l'atome d'hydrogène.

6. Matière de revêtement selon l'une quelconque des revendications 1 à 5, **caractérisée en ce que** le radical R¹ consiste en un groupe méthyle monosubstitué, en particulier en un groupe méthyle qui est monosubstitué par un groupe -OOC-R² dans lequel le radical R² désigne en particulier un radical alkyle en C₄-C₁₂ ramifié.

7. Matière de revêtement selon l'une quelconque des revendications 1 à 6, **caractérisée en ce que** le polyester (C) est contenu dans celle-ci en une quantité de 1 à 30 % en poids, par rapport à la matière solide de la matière de revêtement.

8. Matière de revêtement selon l'une quelconque des revendications 1 à 7, **caractérisée en ce qu'**elle contient, par rapport à ses matières solides,
- 15 à 70 % en poids du composant liant (A),
- 7 à 50 % en poids du composant agent de réticulation (B),
- 1 à 30 % en poids d'au moins un polyester (C) et
- 1,5 à 5 % en poids d'au moins un composant (D)
la somme des pourcentages en poids étant égale à 100 % en poids.

9. Matière de revêtement selon l'une quelconque des revendications 1 à 8, **caractérisée en ce qu'**elle contient, par rapport à sa quantité totale, 20 à 70 % en poids d'au moins un solvant organique (E).

10. Procédé pour la préparation de la matière de revêtement selon l'une quelconque des revendications 1 à 9, dans lequel on mélange l'un avec l'autre avant l'application le composant liant (A) et le composant agent de réticulation (B), **caractérisé en ce qu'**avant le mélange on ajoute au composant liant (A) au moins un polyester hydrophobe de faible masse moléculaire et/ou oligomère, pratiquement non ramifié, comportant au moins deux groupes hydroxy dans la molécule, et ayant un indice de groupes OH de 56 à 500 mg de KOH/g, un indice d'acide < 10 mg de KOH/g et ayant une masse moléculaire moyenne en nombre Mn de 300 à 2 000 daltons.

11. Procédé selon la revendication 10, **caractérisé en ce que** le polyester (C) présente la formule générale I
**[R**^{**1**}**-CH(OH)-CH**_{**2**}**-OOC-]**_{**2**}**R** (I)
dans laquelle les variables ont les significations suivantes :
R représente un radical alcanediyle en C₁-C₂₀, alcènediyle en C₂-C₂₀, cycloalcanediyle ou cycloalcènediyle en C₄-C₂₀, arylidène en C₆-C₁₂ ou arylalkyle, arylalcényle, arylcycloalkyle ou arylcycloalcényle divalent en C₆-C₂₀, substitué ou non-substitué ; ou
un radical aliphatique, cycloaliphatique, acyclique ou cyclique à insaturation oléfinique, aromatique, aliphatique-aromatique, cycloaliphatique-aromatique, acyclique insaturé-aromatique ou cyclique-insaturé-aromatique, divalent, substitué ou non substitué, qui comporte au moins un groupe ester d'acide carboxylique ;
R¹ représente un atome d'hydrogène ou un radical alkyle en C₁-C₂₀, alcényle en C₂-C₂₀, cycloalkyle ou cycloalcényle en C₄-C₁₂, aryle en C₆-C₁₂ ou arylalkyle, arylalcényle, arylcycloalkyle, arylcycloalcényle, alkylaryle, alcénylaryle, cycloalkylaryle, cycloalcénylaryle, alkylcycloalkyle, alkylcycloalcényle, alcénylcycloalkyle, alcénylcycloalcényle, cycloalkylalkyle, cycloalcénylalkyle, cycloalkylalcényle ou cycloalcénylalcényle, en C₆-C₂₀ monovalent, substitué ou non substitué.

12. Procédé selon la revendication 11, **caractérisée en ce que** le radical R contient au moins un groupe hydroxy.

13. Procédé selon la revendication 11 ou 12, **caractérisé en ce que** le radical R¹ est substitué, en particulier par au moins l'un des substituants suivants : -F, -Cl, -Br, -I, -CN, -NO₂, -OH, -OR², -SH, -SR², -NH₂, -NHR², -N(NR²)₂ et/ou -OOC-R², la variable R² ayant la signification de la variable R¹, à l'exception de l'atome d'hydrogène.

14. Procédé selon l'une quelconque des revendications 11 à 13, **caractérisé en ce que** le radical R¹ consiste en un groupe méthyle monosubstitué, en particulier en un groupe méthyle qui est monosubstitué par un groupe -OOC-R² dans lequel le radical R² désigne en particulier un radical alkyle en C₄-C₁₂ ramifié.

15. Procédé selon l'une quelconque des revendications 10 à 14, **caractérisé en ce que** le polyester (C) est ajouté sous la forme d'une peinture mixte qui contient, par rapport à la peinture mixte, 50 à 90 % en poids d'au moins un polyester (C) et 10 à 50 % en poids d'au moins un solvant organique (E) et/ou d'un additif (F) usuel dans des peintures.

16. Procédé selon la revendication 15, **caractérisé en ce qu'**on mélange l'un avec l'autre le composant liant (A) et la peinture mixte en un rapport en volume (A):peinture mixte de (3-5):1.

17. Procédé selon la revendication 16, **caractérisé en ce qu'**on mélange l'un avec l'autre le mélange de composant liant (A) et peinture mixte et le composant agent de réticulation (B) en un rapport en volume mélange:(B) de (3-5):1.

18. Procédé selon la revendication 16, **caractérisé en ce qu'**on mélange le mélange de composant liant (A), peinture mixte et composant agent de réticulation (B) avec au moins un solvant organique (E) en un rapport en volume [(A) + peinture mixte + (B)] : (E) de (4-7) :1.

19. Utilisation de la matière de revêtement selon l'une quelconque des revendications 1 à 9 et/ou de la matière de revêtement produite conformément au procédé selon l'une quelconque des revendications 10 à 18, pour la production de revêtements de peinture colorants et/ou à effet et/ou de revêtements de vernis, monocouches ou multicouches.

20. Utilisation selon la revendication 19, **caractérisée en ce que** la matière de revêtement est utilisée en tant que matière de revêtement pour le bâtiment à l'extérieur et à l'intérieur, pour la mise en peinture en série d'automobiles, le peinturage de réparations d'automobiles, la mise en peinture de véhicules utilitaires, la mise en peinture de fenêtres, portes et meubles ou le peinturage industriel, y compris le peinturage de récipients (*container coating*), le peinturage de rubans en continu (*coil coating*) et le revêtement ou l'imprégnation de composants électrotechniques.
